(19) Europäisches Patentamt
European Patent Office
Office européen des brevets

(11) EP 0 825 942 B1

(12) **EUROPÄISCHE PATENTSCHRIFT**

(45) Veröffentlichungstag und Bekanntmachung des Hinweises auf die Patenterteilung:
**10.03.1999 Patentblatt 1999/10**

(21) Anmeldenummer: 96916130.6

(22) Anmeldetag: 20.05.1996

(51) Int. Cl.⁶: **B60T 13/68**, B60T 8/36

(86) Internationale Anmeldenummer:
**PCT/EP96/02156**

(87) Internationale Veröffentlichungsnummer:
**WO 96/36518 (21.11.1996 Gazette 1996/51)**

(54) **ELEKTROMAGNETISCHE VENTILANORDNUNG UND FAHRZEUGBREMSSYSTEM MIT DIESER ELEKTROMAGNETISCHEN VENTILANORDNUNG**

ELECTROMAGNETIC VALVE DEVICE AND VEHICLE BRAKING SYSTEM PROVIDED WITH SAID DEVICE

DISPOSITIF DE VANNE ELECTROMAGNETIQUE ET SYSTEME DE FREINAGE DE VEHICULES POURVUS D'UN TEL DISPOSITIF

(84) Benannte Vertragsstaaten:
**DE FR GB IT**

(30) Priorität: **18.05.1995 DE 19518333**

(43) Veröffentlichungstag der Anmeldung:
**04.03.1998 Patentblatt 1998/10**

(73) Patentinhaber:
**LUCAS INDUSTRIES public limited company Solihull, West Midlands B90 4LA (GB)**

(72) Erfinder:
• **GEGALSKI, Helmut**
**D-56218 Mülheim-Kärlich (DE)**
• **VOGES, Dieter**
**D-56070 Koblenz (DE)**
• **BARR, Stephen, Philip, John**
**D-56237 Nauort (DE)**
• **GILLES, Leo**
**D-56077 Koblenz (DE)**

(74) Vertreter:
**Schmidt, Steffen J., Dipl.-Ing. et al Wuesthoff & Wuesthoff, Patent- und Rechtsanwälte, Schweigerstrasse 2 81541 München (DE)**

(56) Entgegenhaltungen:
| | |
|---|---|
| **EP-A- 0 452 174** | **EP-A- 0 479 044** |
| **DE-A- 4 427 800** | **DE-C- 4 034 839** |

EP 0 825 942 B1

**Beschreibung**

Die vorliegende Erfindung betrifft eine elektromagnetische Ventilanordnung für ein Druckmedium eines Fahrzeugbremssystems, mit einer Elektromagnetanordnung, die mit einer in mehrere Stellungen bringbaren Ventilschließeinrichtung gekoppelt ist, einem Gehäuse mit einem ersten, einem zweiten, einem dritten und einem vierten Anschluß.

Ventilanordnungen dieser Art gibt es im Stand der Technik in den unterschiedlichsten Ausführungsformen.

Allerdings haben bekannte Ventilanordnungen dieser Art den Nachteil, daß manche Kombinationen von Verbindungen bzw. Unterbrechungen zwischen den vier Anschlüssen nur schwierig herstellbar sind. Insbesondere ist eine explizite und von mehreren Stellungen aus erreichbare Sperrstellung, in der alle Anschlüsse gegeneinander abgesperrt sind, nur mit großem konstruktiven Aufwand erreichbar.

Der vorliegenden Erfindung liegt daher die Aufgabe zugrunde, eine Ventilanordnung der eingangs genannten Art dahingehend zu verbessern, daß mit geringem baulichen Aufwand die vorstehend erläuterten Nachteile behoben sind.

Dazu ist die Ventilanordnung der eingangs genannten Art dahingehend weitergebildet, daß in einer ersten Stellung der erste Anschluß und der zweite Anschluß miteinander verbunden sind, und der dritte Anschluß und der vierte Anschluß gesperrt sind, in einer zweiten Stellung der erste Anschluß, der zweite Anschluß, der dritte Anschluß und der vierte Anschluß gesperrt sind, in einer dritten Stellung der erste Anschluß und der zweite Anschluß gesperrt sind, und der dritte Anschluß und der vierte Anschluß miteinander verbunden sind, und in einer vierten Stellung der erste Anschluß und der dritte Anschluß miteinander verbunden sind, und der zweite Anschluß und der vierte Anschluß gesperrt sind.

Damit kann nach einem Druckaufbau bei einfacher Ansteuerung eine definierte Druckhaltephase realisiert werden, was bei der Verwendung derartiger Ventilanordnungen in z.B. hydraulischen Roboter-Aktuatoren, Fahrzeugbremsanlagen, oder dergl. notwendig sein kann. Insbesondere erfolgt der Eintritt in die Druckhaltephase übergangsfrei; es wird also kein Druckmedium in einen Medium-Speicher abgegeben, so daß der aufgebaute Druck vollständig gehalten wird.

Dem ersten Ventilglied ist bevorzugt eine Druckverringerungsstufe zugeordnet, die in dem Druckmedium herrschenden Druck zwischen zumindest zwei Auslässen reduziert. Damit ist eine stufenlose Variation des Druckaufbaugradienten möglich, ohne daß die Ventilanordnung einen Schaltvorgang ausführt. Die Ventilanordnung schaltet nach einer Druckhaltephase erst wieder bei einem Druckabbau.

In einer bevorzugten Ausführungsform der Erfindung hat die Ventilschließeinrichtung ein mit einem Anker der Elektromagnetanordnung gekoppeltes erstes Ventilglied, wobei die Ventilschließeinrichtung entweder einteilig ist, oder ein zweites Ventilglied und eine mit einem Anker der Elektromagnetanordnung gekoppelte Betätigungseinrichtung für das zweite Ventilglied aufweist. Die einteilige Ausgestaltung der Ventilschließeinrichtung ist insofern vorteilhaft, als sie sie mit sehr wenigen Bauteilen realisiert werden kann.

Bei der zweiteiligen Ausgestaltung der Ventilschließeinrichtung können die beiden Ventilglieder koaxial und an entgegengesetzten Enden des Ankers der Elektromagnetanordnung angeordnet sein. Um eine Strömung des Druckmediums an dem Anker vorbei von dem ersten Ventilglied zu dem zweiten Ventilglied zu ermöglichen, weist der Anker vorzugsweise Kanäle an seiner Außenseite in Form von Nuten oder Längsbohrungen auf, durch die das Druckmedium strömen kann.

Dabei ist das erste Ventilglied durch eine erste Federanordnung gegen den Anker der Elektromagnetanordnung vorgespannt und das zweite Ventilglied ist durch eine zweite Federanordnung gegen einen Ventilsitz vorgespannt.

Außerdem ist der Anker der Elektromagnetanordnung durch eine dritte Federanordnung entgegen der Betätigungsrichtung (B) des ersten Ventilgliedes vorgespannt.

Diese dritte Federanordnung ist einerseits gegen das Gehäuse oder den Ventilsitz und andererseits gegen den Anker abgestützt.

Zumindest das erste Ventilglied weist einen Kanal auf, der in Abhängigkeit von der Stellung des Ventilgliedes über Durchlässe mit einem oder mehreren der ersten, zweiten, dritten, oder vierten Anschlüsse verbindbar oder von diesen trennbar ist. Das zweite Ventilglied kann als Kugelventil realisiert sein.

Vorzugsweise ist die Druckverringerungsstufe in dem Kanal ausgebildet, und weist eine Blende mit einer vorbestimmbaren Durchlaßöffnung für das Druckmedium auf. Durch entsprechende Dimensionierung der Stufenbohrung bzw. der Blende kann eine hohe Dynamik beim Druckaufbau erreicht werden.

Bei bevorzugten Ausführungsformen der Erfindung sind die erste Federanordnung und die dritte Federanordnung in entgegengesetzten Richtungen gegen den Anker der Elektromagnetanordnung vorgespannt. Dabei weist vorzugsweise die erste Federanordnung eine Vorspannkraft auf, die kleiner ist als die Vorspannkraft der dritten Federanordnung. Damit kann auch durch geeignete Auswahl und Zusammenspiel der durch die Elektromagnetanordnung hervorgerufenen Kräfte, dem Druck des Druckmediums und der ansonsten festgelegten Dimensionierungen der Ventilanordnung die Umschaltung aus einer Stellung in eine andere Stellung beeinflußt werden.

Insbesondere ist bei einer Betätigung der Elektromagnetanordnung, um die Ventilschließeinrichtung aus der ersten Stellung, in der die Elektromagnetanordnung unbetätigt ist, in eine andere Stellung zu bringen, in der die Elektromagnetanordnung betätigt ist, die dritte Federanordnung durch die Magnetkraft der Elektromagnetanordnung, die Federkraft der ersten Federanordnung und eine aus einer ggf. vorhandenen Druckdifferenz an der Druckverringerungsstufe resultierenden Kraft komprimierbar.

Insbesondere wenn die Elektromagnetanordnung einen Proportionalelektromagneten aufweist, der durch Beaufschlagung mit Strom unterschiedlicher Stärke die Ventilschließeinrichtung in unterschiedliche Stellungen bringt, kann jeder beliebige (nur durch die Stufenbohrung bzw. die Blende begrenzte) Druckaufbaugradient realisiert werden.

Vorzugsweise ist in einer betätigten Stellung, in der die Ventilschließeinrichtung aus der unbetätigten Stellung maximal ausgelenkt ist, die Federkraft der ersten Federanordnung größer oder gleich Null.

Bei einer für bestimmte Anwendungen besonders geeigneten Ausführungsform der elektromagnetischen Ventilanordnung ist in dem ersten Ventilglied der den ersten Anschluß mit dem Kanal verbindende bzw. trennende Ringkanal so ausrichtbar, daß sich bei einer vorhandenen Druckdifferenz an der Druckverringerungsstufe eine bestimmte Durchtrittsfläche für Druckmedium in den Ringkanal einstellt.

Weiterhin kann in Abhängigkeit von dem Strom durch die Elektromagnetanordnung die Strömung des Druckmediums an der Druckverringerungsstufe so veränderbar sein, daß sich bei einem niedrigem Strom durch die Elektromagnetanordnung ein hoher Druckaufbaugradient und bei einem hohen Strom durch die Elektromagnetanordnung ein niedriger Druckaufbaugradient an dem der Druckverringerungsstufe stromabwärts zugeordneten Auslaß einstellt.

Die Erfindung betrifft auch mit besonderem Vorteil eine Fahrzeugbremsanlage mit einer derartigen elektromagnetischen Ventilanordnung, wobei die Fahrzeugbremsanlage einen über ein Bremspedal betätigbaren Bremskraftverstärker hat, der auf einen Hauptbremszylinder wirkt, eine Pumpenanordnung ein für Druckmedium, der ein Speicher für das Druckmedium zugeordnet ist, sowie wenigstens eine Bremsvorrichtung. Dabei ist der erste Anschluß der Ventilanordnung mit dem Hauptbremszylinder verbunden, der zweite und der dritte Anschluß der Ventilanordnung sind mit der Bremsvorrichtung verbunden, und der vierte Anschluß der Ventilanordnung ist mit dem Druckspeicher verbunden.

Außerdem betrifft die Erfindung auch ein Fahrzeugbremssystem mit einer elektromagnetischen Ventilanordnung, wie sie vorstehend beschrieben ist, einem über ein Bremspedal betätigbaren Bremskraftverstärker, der auf einen Hauptbremszylinder wirkt, einer Pumpenanordnung für Druckmedium, der ein Speicher für das Druckmedium zugeordnet ist, sowie wenigstens einer Bremsvorrichtung, dadurch gekennzeichnet, daß der erste Anschluß der Ventilanordnung mit dem Hauptbremszylinder verbunden ist, der zweite und der dritte Anschluß der Ventilanordnung mit der Bremsvorrichtung verbunden sind, und der vierte Anschluß der Ventilanordnung mit dem Druckspeicher und/oder der Pumpenanordnung verbunden ist.

In einer weiteren Ausführungsform der elektromagnetische Ventilanordnung ist die Ventilschließeinrichtung in eine fünfte Stellung bringbar, und das Gehäuse weist einen fünften Anschluß auf, wobei in der fünften Stellung der zweite Anschluß und der fünfte Anschluß miteinander in Strömungsverbindung stehen, und der erste Anschluß, der dritte Anschluß und der vierte Anschluß gesperrt sind.

Vorzugsweise ist bei dieser Ausführungsvorm der ektromagnetische Ventilanordnung der fünfte Anschluß in den anderen Stellungen gesperrt.

Schließlich betrifft die Erfindung ein Fahrzeugbremssystem mit einer elektromagnetischen Ventilanordnung wie sie vorstehend beschrieben ist, einer Sensoreinrichtung zum Erfassen von an einem Bremspedal auftretenden statischen und dynamischen Zuständen, mit einer elektronischen Steuervorrichtung zur Erzeugung von Steuersignalen für die elektromagnetische Ventilanordnungin Abhängigkeit von den an dem Bremspedal auftretenden statischen und dynamischen Zuständen, einer unter Druck stehendes Hydraulikfluid liefernden Quelle, einem Reservoir für Druckmedium, sowie wenigstens einer Bremsvorrichtung dadurch gekennzeichnet, daß der erste Anschluß der Ventilanordnung mit der unter Druck stehendes Hydraulikfluid liefernden Quelle verbunden ist, der zweite und der dritte Anschluß der Ventilanordnung mit der Bremsvorrichtung verbunden sind, und der vierte und fünfte Anschluß der Ventilanordnung mit dem Reservoir verbunden sind.

Weitere Vorteile, Eigenschaften und Merkmale der Erfindung werden anhand der beigefügten Zeichnungen nachstehend erläutert.

Fig. 1 zeigt eine erste Ausführungsform einer elektromagnetischen Ventilanordnung in einem schematischen Längsschnitt.

Fig. 2a bis 2d zeigen die unterschiedlichen Stellungen der elektromagnetischen Ventileinrichtung aus Fig. 1.

Fig. 3 zeigt eine zweite Ausführungsform der elektromagnetischen Ventilanordnung in einem schematischen Längsschnitt.

Fig. 4 zeigt ein Fahrzeugbremssystem mit einer elektromagnetischen Ventilanordnung gemäß Fig. 1, 3, 8 oder 9.

Fig. 5 zeigt das Ablaufdiagramm einer Antiblockierregelung in Abhängigkeit von der Betätigung der elektromagnetischen Ventilanordnung, der Betätigung des Pumpenmotors und den daraus resultierenden Bremsdruck an der Radbremse.

Fig. 6 zeigt eine dritte Ausführungsform der elektromagnetischen Ventilanordnung in einem schematischen Längsschnitt.

Fig. 7 zeigt ein Fahrzeugbremssystem mit einer elektromagnetischen Ventilanordnung gemäss Fig. 6.

Fig. 8 zeigt eine vierte Ausführungsform der elektromagnetischen Ventilanordnung in einem schematischen Längsschnitt.

Fig. 9, 9a zeigt eine fünfte Ausführungsform der elektromagnetischen Ventilanordnung in einem schematischen Längsschnitt.

Fig. 10 zeigt ein Fahrzeugbremssystem mit einer elektromagnetischen Ventilanordnung gemäß Fig. 1, 3, 8 oder 9.

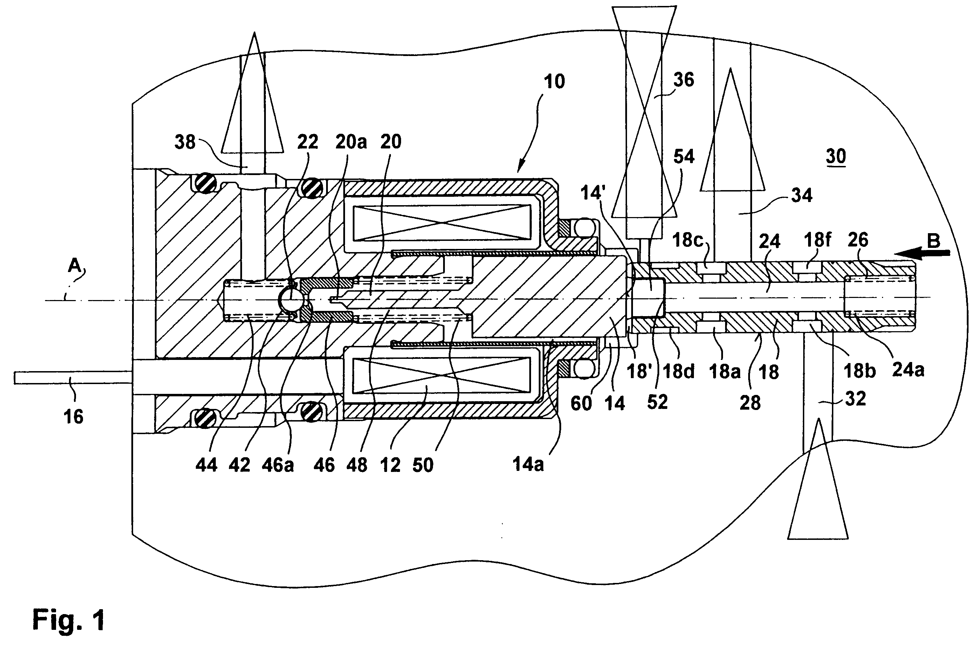

Fig. 1 zeigt eine allgemein mit 10 bezeichnete elektromagnetische Ventilanordnung, die eine aus einer zylindrischen Spule 12 und einen im Inneren der Spule 12 geführten Anker 14 aufweist. Der Anker 14 ist längs der Mittelachse A bei Beaufschlagung der Spule 12 mit Strom über die Leitung 16 durch eine (nicht gezeigte) elektronische Ansteuervorrichtung verschiebbar. Vorzugsweise handelt es sich dabei um eine Proportional-Elektromagnetanordnung, bei der die Auslenkung des Ankers 14 in Abhängigkeit von dem eingespeisten Strom erfolgt. Koaxial mit dem Anker 14 ist dieser mit einem ersten Ventilglied 18 und einer stiftförmigen Betätigungseinrichtung 20 für ein zweites Ventilglied 22 gekoppelt.

Das erste Ventilglied 18 ist in einer zylindrischen Bohrung 28 in einem Gehäuse 30 aufgenommen und hat die Form einer rohrförmigen Hülse, die einen zur Längsachse A koaxial verlaufenden Kanal 24 aufweist. Am Umfang des Ventilglieds 18 sind ein erster, zweiter und dritter umlaufender Ringkanal 18d, 18e, 18f ausgeformt, wobei von dem zweiten und dritten Ringkanal 18e, 18f ein erster und zweiter radialer Durchlaß 18a, 18b zu dem Kanal 24 führen. Durch eine erste Federanordnung in Form einer zylindrischen Schraubenfeder 26 ist das erste Ventilglied 18 gegen den Anker 14 axial vorgespannt. Dazu weist der Kanal 24 an seinem von dem Anker 14 abliegenden Ende einen sich radial erweiternden Absatz 24a auf, an dem sich die Schraubenfeder 26 unter Vorspannung abstützt.

Das Gehäuse 30 weist darüber hinaus einen ersten Anschluß 32, einen zweiten Anschluß 34, einen dritten Anschluß 36 sowie einen vierten Anschluß 38 auf. Durch die Anschlüsse 32 ... 38 kann ein vorzugsweise hydraulisches Druckmedium zu der elektromagnetischen Ventilanordnung 10 hingeführt oder abgeführt werden. Dazu ist der erste Anschlüsse 32 dem dritten Ringkanal 18f, der zweite Anschluß 34 dem zweiten Ringkanal 18e sowie der dritte Anschluß 36 dem dritten Ringkanal 18d zugeordnet.

Das zweite Ventilglied ist durch eine Kugel 22 gebildet, die über einen Kugelkäfig 42 durch eine zweite Federanordnung in Form einer zylindrischen Schraubenfeder 44 gegen einen Ventilsitz 46 abgestützt ist. Dieser Ventilsitz 46 ist durch eine Hülse gebildet, die in einer sich koaxial zu der Achse A erstreckenden zylindrischen Bohrung 48 im Preßsitz aufgenommen ist. Die Hülse weist einen Durchlaß 46a auf, durch den das Druckmedium bei geöffneter Stellung zu dem vierten Anschluß 38 strömen kann.

Die mit dem Anker 14 verbundene Betätigungseinrichtung 20 weist an ihrem vorderen Ende eine stiftförmige Verjüngung 20a auf, deren Durchmesser so bemessen ist, daß unter Ausbildung eines Ringspaltes mit der Wandung des Durchlasses 46a die Kugel 22 von dem Ventilsitz 46 gegen die Kraft der Feder 44 abgehoben werden kann.

Die Betätigungseinrichtung 20 umgebend ist eine dritte Federanordnung in Form einer Schraubenfeder 50 zwischen dem hülsenförmigen Ventilsitz 46 und dem Anker 14 unter Vorspannung angeordnet, so daß der Anker 14 gegen die Betätigungsrichtung des ersten Ventilgliedes 18 vorgespannt ist. Dies wird dadurch erreicht, daß die Vorspannkraft der dritten Feder 50 größer als die Vorspannkraft der ersten Feder 26 ist.

Der Kanal 24 in dem ersten Ventilglied 18 weist an seinem dem Anker 14 zugewandten Ende eine stufenförmige Erweiterung 54 auf, in der eine Blende 52 mit einer vorbestimmbaren Durchlaßöffnung für das Druckmedium angeordnet ist.

An seinem dem Anker 14 zugewandten stirnseitigen Ende 18' weist das erste Ventilglied 18 von dem Kanal 24 radial nach außen gehende Durchlässe auf, so daß Druckmedium aus dem Kanal 24 in eine dem Anker 14 an dessen dem ersten Ventilglied 18 zugewandten Ende umgebende ringförmige Kammer 60 und von dort aus entlang über den Umfang verteilte Kanäle 14a des Ankers 14 in den Raum 48 zu dem zweiten Ventilsitz 46 gelangen kann.

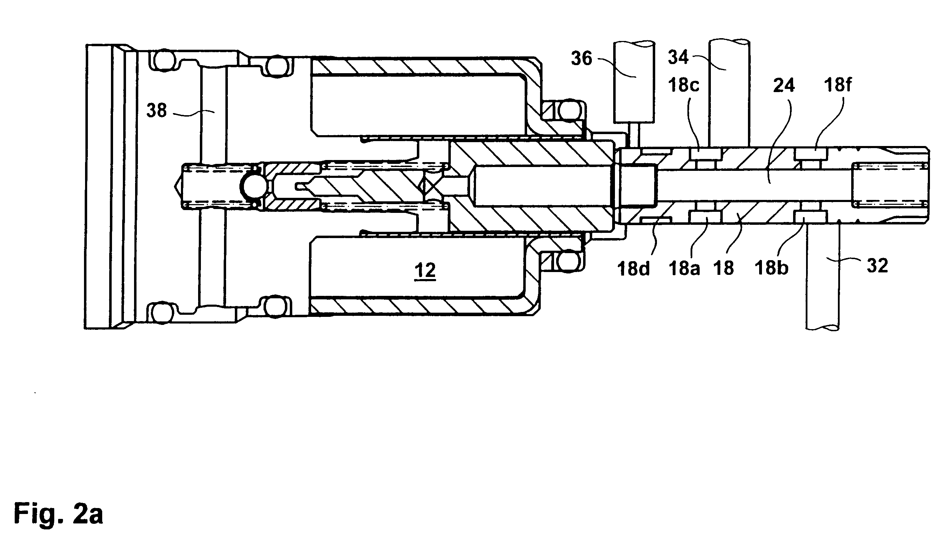

Die Funktionsweise der in Fig. 1 gezeigten elektromagnetischen Ventilanordnung wird nachstehend unter Bezugnahme auf Fig. 2a bis 2d erläutert.

Fig. 2a zeigt die elektromagnetische Ventilanordnung in einer ersten (unbetätigten) Stellung (I.). Dabei ist der erste Anschluß 32 über den Ringkanal 18f und den Durchlaß 18b mit dem Kanal 24 verbunden. Der Kanal 24 steht über den Durchlaß 18a und den Ringkanal 18e mit dem Anschluß 34 in Strömungsverbindung. In dieser unbetätigten Stellung (I.) ist der dritte Anschluß 36 gegenüber dem Ringkanal 18d so versetzt, daß der Anschluß 36 nicht mit der Kammer 60 kommuniziert.

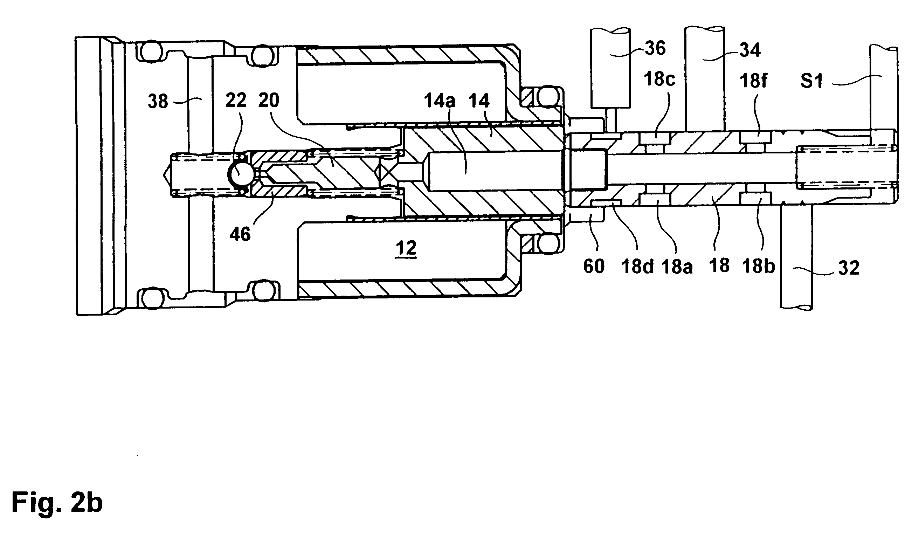

Um das erste Ventilglied 18 in seine in Fig. 2b veranschaulichte zweite (betätigte) Stellung (II.) zu bringen, ist es erforderlich, die Spule 12 mit einem Strom vorbestimmter Stromstärke I1 zu beaufschlagen. Dies hat zur Folge, daß der Anker 14 sich gegen die Feder 50 auf das zweite Ventilglied 22 zubewegt (in Fig. 2b nach oben) und dabei durch die Feder 26 unterstützt wird, so daß das erste Ventilglied 18 sich ebenfalls nach oben um die Strecke s1 verschiebt. In dieser zweiten Stellung (II.) ist der Anschluß 32 gegenüber dem Ringkanal 18f axial soweit verschoben, daß der Anschluß 32 gesperrt ist. In der gleichen Weise ist der zweite Anschluß 34 gegenüber dem Ringkanal 18e axial verschoben, so daß auch der zweite Anschlußes 34 gesperrt ist. Der dritte Anschluß 36 steht über den Ringbund 18d, die Kammer 60 und den Kanal 14a mit dem Raum 48 in Verbindung (Gegenüber Fig. 1 ist der Kanal 14 a hier als Mittenkanal 14a durch den Anker 14 ausgeführt, der mit der Kammer 60 über die an der Stirnseite 18' des Ventilglieds 18 angeordneten Durchlässe kommuniziert). Die von dem Anker 14 - und damit auch von der Betätigungseinrichtung 20 - in Richtung auf das zweite Ventilglied 22 ausgeführte Bewegung ist jedoch nicht ausreichend um das Ventilglied 22 von dem Ventilsitz 46 abzuheben. Die zweite Feder 44 ist so dimensioniert, daß sie durch den an dem dritten Anschluß 36 anliegenden Druckmedium nicht unter Abhebung der Kugel 22 von dem Ventilsitz 46 komprimierbar ist. Dies bedeutet, daß auch der dritte Anschluß 36 und der vierte Anschluß 38 gesperrt sind.

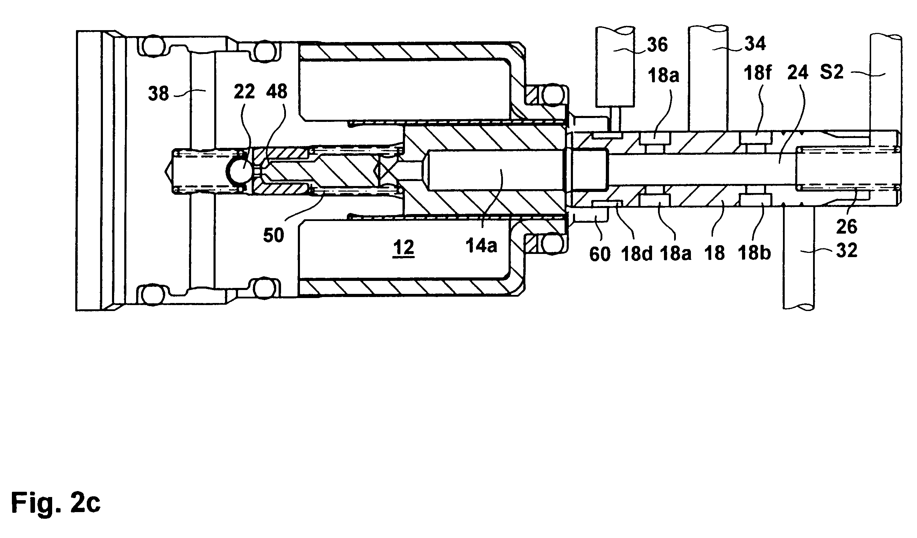

In der in Fig. 2c gezeigten dritten Stellung (III.) der Ventilanordnung ist die Spule 12 mit einem Strom $I_2$ von solcher stromstärke beaufschlagt, daß der Anker 14 sich gegen die Kraft der dritten Feder 50 um den Betrag s2 nach oben in Richtung auf das zweite Ventilglied 22 bewegt, wobei die erste Federanordnung 26 das Ventilglied 18 ebenfalls nach oben schiebt. Dies hat zur Folge, daß der stiftförmige Fortsatz 20a der Betätigungseinrichtung 20 die Öffnung 46a in dem Ventilsitz 46 soweit durchstößt, daß das Ventilglied 22 von dem Ventilsitz 46 abhebt und dabei den dritten Anschluß 36 mit dem vierten Anschluß 38 über den Ringbund 18d, die Kammer 60, die an der Stirnseite 18' des Ventilglieds 18 angeordneten Durchlässe, den Mittenkanal 14a und dem Raum 48 in Strömungsverbindung bringt. Der erste Anschluß 32 und der Anschluß 34 bleiben gegenüber dem Kanal 24 gesperrt.

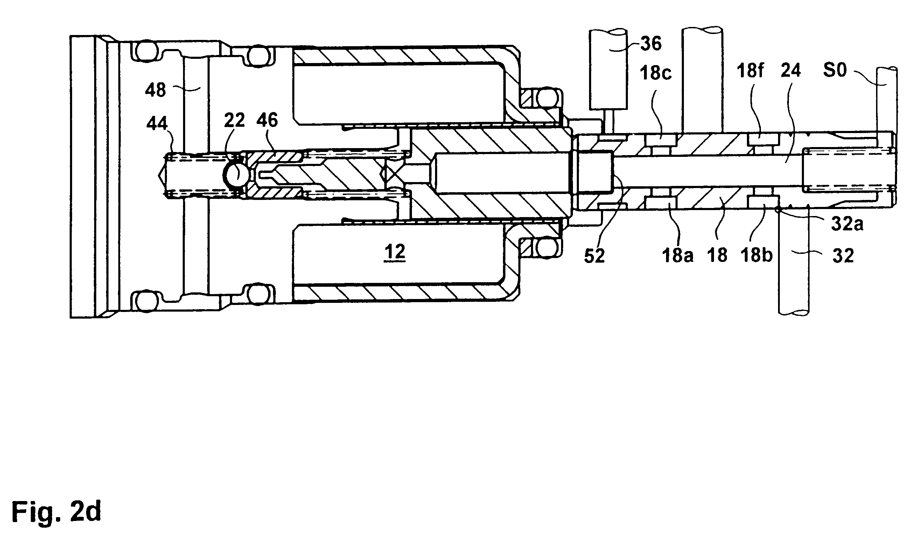

In der in Fig. 2d gezeigten vierten Stellung (IV.) wird die Spule 12 mit einem Strom $I_0$ derartiger Stärke beaufschlagt, daß der Anker 14 und das erste Ventilglied 18 gegenüber der in Fig. 2a gezeigten unbetätigten Stellung die um die Strecke s0 in Axialrichtung nach oben verschobene Position einnehmen. Insgesamt gilt sowohl für die Betätigungsströme in den drei Stellungen (Fig. 2b, 2c und 2d) und die Betätigungswege s0, s1, s2 folgender Zusammenhang:

$$I_0 < I_1 < I_2;$$

$$s_0 < s_1 < s_2.$$

In der um die Strecke $s_0$ verschobenen vierten Position (IV.) ist das zweite Ventilglied 22 wieder durch die zweite Feder 44 auf den Ventilsitz 46 gedrängt, da der stiftförmige Fortsatz 20a der Betätigungseinrichtung 20 sich zusammen mit dem Anker 14 wieder nach unten bewegt hat. Damit ist der vierte Anschluß 38 wieder gesperrt. Der erste Anschluß 32 ist gegenüber dem Ringkanal 18f so angeordnet, daß ein Durchtritt von Druckmedium über den Anschluß 32 in den Kanal 24 ermöglicht ist. Die Durchtrittsstelle hat die Funktion einer Regelkante 32a. Der zweite Anschluß 34 ist gegenüber dem Ringkanal 18e in axialer Richtung so versetzt, daß dieser gesperrt ist. Der dritte Anschluß 36 steht über den Ringkanal 18d mit der Kammer 60 in Verbindung, die über die an der Stirnseite 18' des Ventilgliedes 18 angeordneten Durchlässe mit dem Kanal 24 verbunden ist. Damit besteht über die im Kanal 24 angeordnete Blende 52 eine Strömungsverbindung vom ersten Anschluß 32 zum dritten Anschluß 36.

In der (ausgeglichenen) Regelstellung (IV.), bei der der Anker 14 um den Weg $s_0$ aus der Ruhestellung abgehoben ist, besteht ein Gleichgewicht der Kräfte zwischen der ersten Federanordnung F26, der dritten Federanordnung F50, der Kraft der Elektromagnetanordnung F12 und der durch die Strömung an der Blende 52 hervorgerufenen Kraft F52 aus dem Druckmedium. Damit kann die Strömung des Druckmediums an der Blende 52 und folglich auch der Druckaufbaugradient an dem dritten Anschluß 36 variiert werden.

Eine Variation des Stroms $I_0$ durch die Spule 12 innerhalb des Bereiches $0 <= I0 < I1$ bewirkt eine entsprechende Änderung der elektromagnetischen Kraft F12. Da die Federkräfte F26 und F50 nur vom Weg s0 abhängig sind, der in der Regelstellung (IV.) nahezu als konstant angenommen werden kann, wird aufgrund des Gleichgewichts der Kräfte durch Änderung der elektromagnetischen Kraft F12 auch eine Änderung der durch die Strömung an der Blende 52 hervorgerufenen Kraft F52 bewirkt, die über die an der Blende 52 anstehenden Druckdifferenz den Voluumenstrom durch die Blende 52 bestimmt. Dies hat zur Folge, daß bei einem geringen Strom durch die Spule 12 ein größerer Druckaufbaugradient und bei einem höheren Strom durch die Spule 12 sich ein kleinerer Druckaufbaugradient sich einstellt.

Der Durchschnittsquerschnitt an der Regelkante 32a und damit der Weg $s_0$ wird innerhalb vernachlässigbarer Grenzen beeinflußt durch die Viskosität des Druckmediums, dem Spiel zwischen dem Ventilglied 18 und der Wandung der Bohrung 28 sowie der zwischen dem ersten Anschluß 32 und dem dritten Anschluß 36 herrschenden Druckdifferenz.

Der Proportionalmagnet kann durch Strom-, Spannung- bzw. Pulsweitenmodulationssignale (durch die elektrische Steuerung) angesteuert werden, um die jeweiligen Stellungen schnell und positionsgenau einzunehmen. Insbesondere die Stellung zum Öffnen des zweiten Ventilgliedes 22 kann durch kurzzeitiges Überhöhen des Stroms bzw. der Spannung eingenommen werden.

Bei einer bevorzugten Ausführungsform der Erfindung beträgt der gesamte Hubweg des Ankers 2,5 mm. Dabei entfallen 1,5 mm auf den Weg $s_0$ (Fig. 2d), 0,75 mm auf einen Sicherheitsabstand, damit das erste Ventilglied 18 in der Position s1 den Ringkanal 18f sicher gegen den ersten Anschluß 32 abdichtet (Fig. 2b) und 0,25 mm sind die Differenz zwischen s1 und s2, um die das zweite Ventilglied 22 von seinem Ventilsitz 46 abgehoben wird (Fig. 2c).

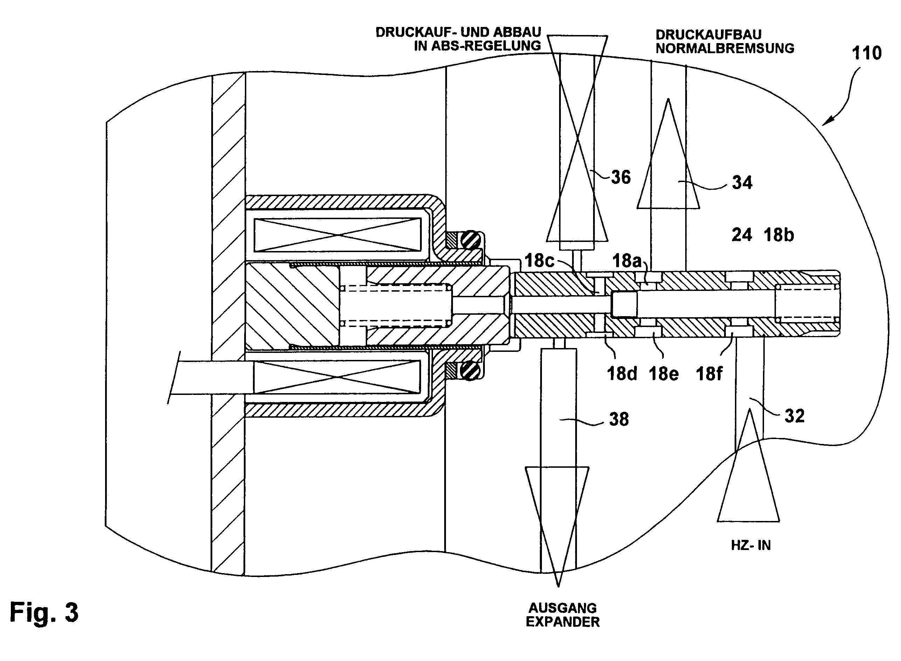

In Fig. 3 ist eine zweite Ausführungsform der elektromagnetischen Ventilanordnung veranschaulicht, wobei hier das zweite Ventilglied 22, die zweite Federanordnung 44, der Ventilsitz 46, die Betätigungseinrichtung 20 mit dem stiftförmigen Fortsatz 20a und die Kanäle 14a in dem Anker 14 dadurch eingespart sind, daß der vierte Anschluß 38 über den ersten Ringkanal 18d und einen von diesem ausgehenden dritten Durchlaß 18c mit dem Kanal 24 verbindbar ist, wobei der dritte Durchlaß 18c in den von der Blende 52 und dem Anker 14 begrenzten Bereich des Kanals 24 eintritt. Der Wegfall der zweiten Federanordnung 44 erfordert gegenüber der Ausführungsform gemäß Fig. 1 eine geringere Magnetkraft um die Anordnung in die dritte Schaltstellung (III.) zu überführen, so daß Einsparungen auch bei Auslegung der Elektromagnetanordnung und deren elektrischer Ansteuerung möglich sind. Im übrigen sind die Ventilanordnungen gemäß Fig. 1 und Fig. 3 übereinstimmend in Aufbau und Funktion, so daß sich eine detaillierte weitere Beschreibung erübrigt.

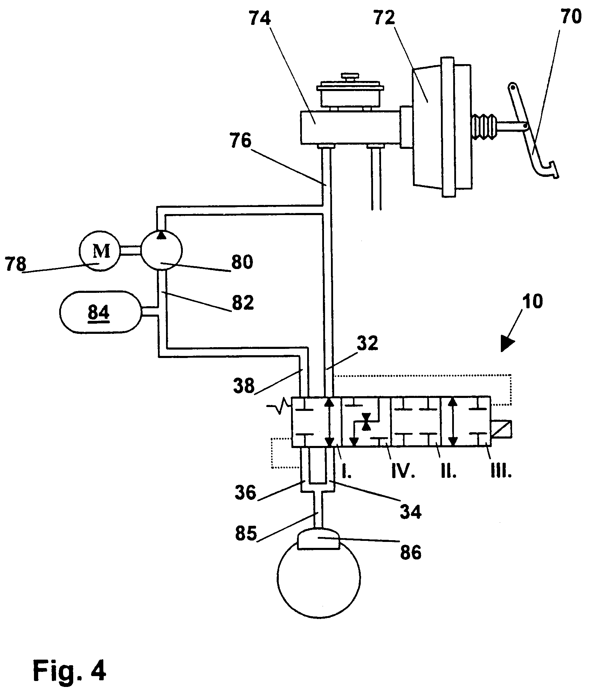

Das in Fig. 4 gezeigte Fahrzeugbremssystem weist eine elektromagnetische Ventilanordnung gemäß Fig. 1 oder Fig. 3 auf. Ein über ein Bremspedal 70 betätigter pneumatischer Bremskraftverstärker 72 betätigt einen Hauptbremszylinder 74, der über eine Leitung 76 mit dem ersten Anschluß 32 der Ventilanordnung 10 verbunden ist. Eine von der Leitung 76 abgehende Abzweigung 76a führt zur Saugseite einer durch einen Elektromotor 78 betriebenen Pumpe 80, die über eine Leitung 82 mit einem Druckspeicher 84 und dem vierten Anschluß 38 der Ventilanordnung 10 verbunden ist. Der zweite und der dritte Anschluß 34, 36 der Ventilanordnung 10 sind zusammengelegt und führen über eine Leitung 85 an eine Radbremse 86.

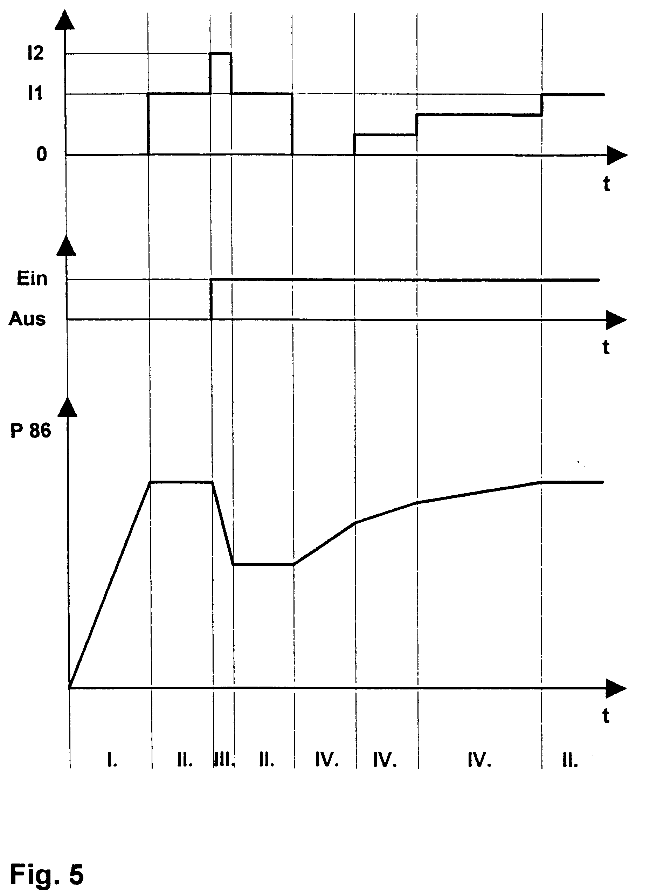

In den Diagrammen von Fig. 5 ist der Ablauf einer Antiblockierregelung eines Fahrzeugbremssystems gemäß Fig. 4 veranschaulicht. Dabei zeigt das oberste Diagramm den Verlauf des Stroms in der Spule 12, das mittlere Diagramm die Betätigung des Motors 78 der Pumpe 80 und das unterste Diagramm den Druckverlauf in der Leitung 85, d.h. an der Radbremse 86.

Ausgehend von der ersten Stellung (I.) für Normalbremsungen, bei der die Ventilanordnung die in Fig. 2a gezeigte Position hat , wird bei Erkennen einer Blockierneigung der Räder durch einen Strom $I_1$ an der Spule 12 in die zweite Stellung (II.) (siehe Fig. 2b) umgeschaltet. Dadurch wird der Bremsdruck in der Bremse 86 konstant gehalten. Falls eine Antiblockierregelung nicht erforderlich ist, wird auf die Normalstellung durch Abschalten des Stromes auf Null (Fig. 2a) zurückgeschaltet. Falls eine Antiblockierregelung erforderlich ist, so ist dies über eine erste Druckabbauphase einzuleiten. Dies erfolgt durch Erhöhen des Stroms an der Spule 12 auf den Wert I2, so daß sich die Ventilanordnung in die in Fig. 2c gezeigte Stellung (III.) bringt, damit das Bremsfluid von der Bremse 86 in den Druckspeicher 84 abfließen kann. Gleichzeitig mit der Einleitung der ersten Druckabbauphase wird der Motor 78 der Pumpe 80 für die Dauer der Antiblockierregelung aktiviert, um das Bremsfluid vom Druckspeicher 84 in den Bremskreis 76 zurückzufördern. Ausgehend von dieser dritten Stellung (III.) kann sowohl in die zweite Stellung (II.) wie in Fig. 5 dargestellt, als auch unmittelbar in die vierte Regelstellung (IV.) gemäß Fig. 2d umgeschaltet werden. In der vierten Stellung (IV.) können durch Variation des Stroms duch die Spule 12 unterschiedliche Druckaufbaugradienten eingestellt werden, so daß der während der Druckaufbauphase wie in Fig. 5 dargestellt der Druckaufbaugradient mit Annäherung an das Blockierdruckniveau stetig reduziert werden kann, um einen nahezu idealen Druckverlauf an der Radbremse 86 einzustellen. Durch gezielten Wechsel zwischen den Stellungen 2b, 2c, 2d kann der Bremsdruck durch Einstellung von Drucknalte-, Druckabbau- sowie insbesondere Druckaufbauphasen mit variablem Druckaufbaugradienten beliebig moduliert werden.

Die Funktion der erfindungsgemäßen elektromagnetischen Ventilanordnung wird nachstehend anhand einer Kräftebilanz an dem Anker 14 erläutert. Dabei gehen die von der ersten Federanordnung 26 erzeugte Federkraft F26, die von der Spule 12 erzeugte elektromagnetische Kraft F12, die an der Blende 52 in Folge eines Durchströmens von Druckmedium erzeugte Differenz-Druckkraft F52 sowie die Kraft der dritten Federanordnung F50 in die Betrachtung ein. Der Federkraft F50 sind die Magnetkraft F12, der Differenzdruck F52 und die Federkraft F26 entgegengesetzt. Dabei ergibt sich die Federkraft F26 aus ihrer Federkonstanten c26 und der Stellung des Ankers 14 entlang der Achse A, die Federkraft F50 aus der Federkonstanten c50 und der Stellung des Ankers 14 entlang der Achse A, die Magnetkraft F12 ist ein Funktion des durch die Spule 12 fließenden Stroms und die aus der Druckdifferenz an der Blende 52 resultierende Kraft F52 ist proportional der Quadratwurzel des Volumenstroms durch die Blende 52.

In der in Fig. 2a gezeigten Stellung für normales Bremsen ist die Spule 12 stromlos, an der Blende 52 ist keine Druckdifferenz' so daß die Magnetkraft F12 und die Druckkraft F52 Null sind. Da die erste und die dritte Feder 26, 50 vorgespannt sind, wobei die Vorspannkraft F0,50 der Feder 50 größer ist als die Vorspannkraft F0,26 der Feder 26, wird der Anker 14 und damit das erste Ventilglied 18 in die unbetätigte Stellung gedrängt.

In der in Fig. 2b gezeigten Stellung ist die Druckdifferenz immer noch Null, so daß die Kraft F52 Null ist. Die Magnetkraft F12 ist durch geeignete Wahl des Stromes I1 so gewählt, daß unter Berücksichtigung der beiden Federkonstanten c26, c50 und der beiden Vorspannkräfte F0,26, F0,50 der Anker 14 und damit das erste Ventilglied 18 um die Strecke s1 entlang der Achse A verschoben werden. Da hierbei an der Blende 52 kein Druckabfall auftritt und damit auch keine Strömung von Druckmedium, besteht die Möglichkeit auf die Grundstellung 2a zurückzuschalten.

In der in Fig. 2c gezeigten Stellung ist die Druckdifferenz immer noch Null, so daß die Kraft F52 Null ist. Der Strom durch die Spule 12 wird so gewählt, daß unter Berücksichtigung der Federkonstanten c26, c50, der Vorspannkräfte F0,26, F0,50 sowie der Federkraft F44 der zweiten Federanordung, die sich aus deren Vorspannkraft F0,44, deren Federkonstanten c44 sowie dem Hubweg des zweiten Ventilgliedes 22 ergibt, der Anker 14 und das erste Ventilglied 18 sich um die Wegstrecke s2 entlang der Achse A bewegen.

Die Vorspannkraft F0,26 der ersten Feder 26 ist so ausgelegt, daß diese größer oder zumindest gleich der aus der Federkonstanten c26 und der Wegstrecke s2 resultierenden Kraft ist. Damit ist gewährleistet, daß der Anker 14 und das erste Ventilglied 18 über den der Anordnung zugrundeliegenden Betätigungsweg $0 <= s <= s2$ stets aneinander an ihren gemeinsamen Stirnflächen 14', 18' anliegen.

Um den Bremsdruck geregelt aufbauen zu können, müssen der Anker 14 und das erste Ventilglied 18 die in Fig. 2d gezeigte Regelstellung eingenommen haben, in der der Anker 14 und das erste Ventilglied 18 um den Weg $s_0$ entlang der Achse A aus der Grundstellung verschoben sind. Dabei ist die Summe aus der Kraft F52 und der Kraft F12 gleich der Summe der beiden Federkonstanten c26 und c50 multipliziert mit dem Weg s0 zuzüglich der Differenz aus der Vorspannkraft F0,50 und F0,26. Da wie bereits zuvor erläutert die Kraft F52 proportional zum Volumenstrom durch die Blende 52 ist, kann durch eine Variation des Stroms I durch die Spule zwischen Null und I1 der Druckaufbaugradient variiert werden.

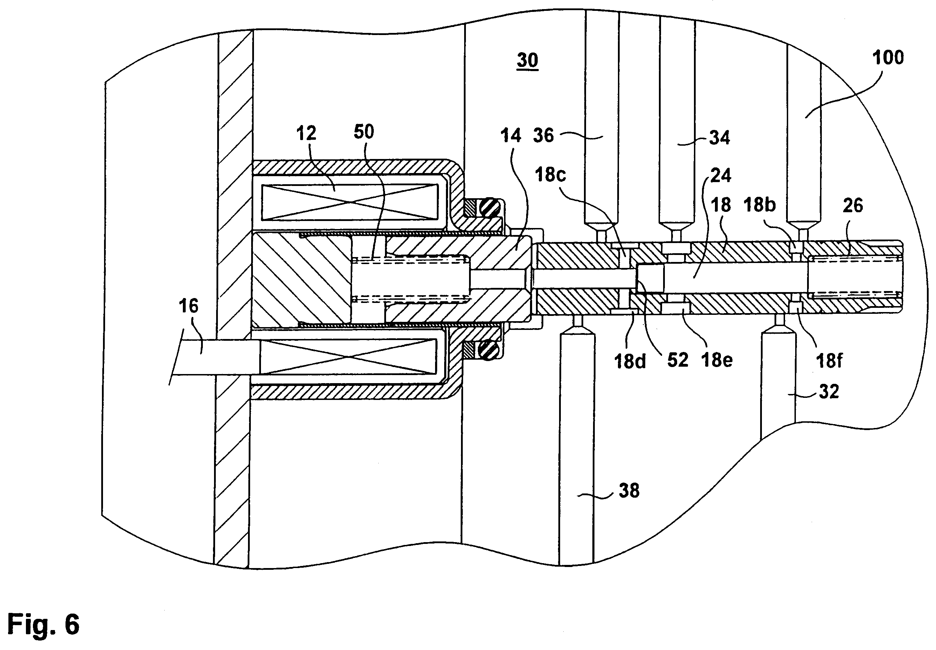

In Fig. 6 ist eine dritte mit 110 bezeichnete Ausführungsform der elektromagnetischen Ventilanordnung dargestellt, die einen fünften Anschluß 100 aufweist, der dem dritten Ringkanal 18f zugeordnet ist und somit über den zweiten radialen Durchlaß 18b mit dem Kanal 24 in Verbindung bringbar ist. Damit ist eine weitere fünfte Schaltstellung (V.) verfügbar, in der der dritte Anschluß 36 und der fünfte Anschluß 100 miteinander in Verbindung stehen, und der erste Anschluß 32, der zweite Anschluß 34 und der vierte Anschluß 38 gesperrt sind. Diese fünfte Stellung (V.) wird bei stromloser Spule 12 unter Wirkung der aus der ersten und dritten Federanordnung 26, 50 resultierenden Federkraft eingenommen und stellt somit die unbetätigte Grundstellung, wie in Fig. 6 gezeigt, dar. Ausgehend von der Grundstellung sind bei entsprechender Bestromung der Spule 12 die selbigen Verbindungen zwischen den Anschlüssen 32 ... 38 gemäß der Schaltstellungen I., II., II. und IV. der Ausführungsformen nach Fig. 1 oder Fig. 3 herstellbar, wobei der fünfte Anschluß 100 stets gesperrt ist. Ansonsten stimmt die Ausführung gemäß Fig. 6 mit den Ausführungen gemäß Fig. 1 oder Fig. 3 überein, so daß eine weitergehende Beschreibung nicht erforderlich ist.

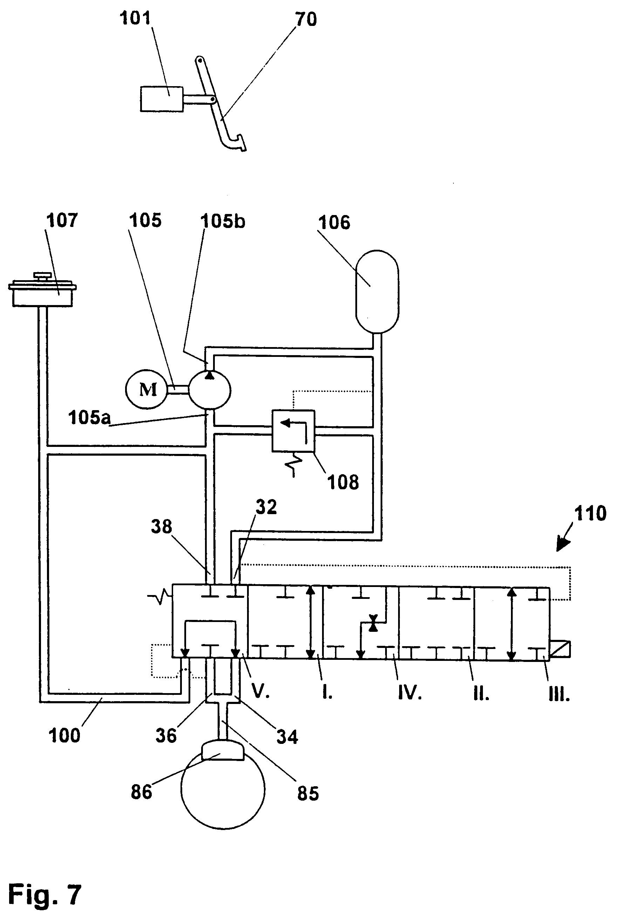

Das in Fig. 7 dargestellte Fahrzeugbremssystem weist eine elektromagnetische Ventilanordnung 110 gemäß Fig. 6 auf. Dabei handelt es sich um ein sogenanntes "Brake-by-Wire" System, bei dem der Fahrerwunsch an einem mit einem Wegsimulator 101 verbundenen Bremspedal 70 mit einer hier nicht dargestellten Sensorik erfaßt, in Form von elektrischen Signalen einer hier nicht dargestellten elektronischen Steuerung zugeführt, dort ausgewertet und zur Erzeugung elektrischer Ansteuersignale zur Ansteuerung der Ventilanordnung 110 und einer elektromotorisch betriebenen Pumpe 105 herangezogen wird. Damit erlaubt ein solches System auch vom Fahrerwunsch unabhängige Bremseingriffe, insbesondere Antriebsschlupfregelung und/oder fahrdynamische Regelungen.

Der zum Bremsen erforderliche Bremsdruck wird durch eine Einheit bestehend aus der Hydraulikpumpe 105 und einem Druckspeicher 106 bereitgestellt. Dazu ist die Eingangsseite 105a der Pumpe 105 mit einem Reservoir 107 verbunden, um Hydraulikfluid anzusaugen, während die Ausgangsseite 105b der Pumpe 105 eine direkte Verbindung mit dem Anschluß 106a des Druckspeichers 106 aufweist. Zum Schutz des Systems ist zwischen der Eingangsseite 105a und der Ausgangsseite 105b der Pumpe 105 ein Druckbegrenzungsventil 108 angeordnet, welches den Druck im Speicher 106 auf einen vorgegebenen Grenzwert limitiert. Damit der Druck im Speicher 106 gehalten werden kann, ist die Pumpe 105 druckhaltend ausgeführt, was in geeigneter Weise durch Rückschlagventile oder einen selbsthemmenden Antrieb erreicht wird.

Um als Stellglied den Bremsdruck in der Radbremse 86 zu modulieren, weist die Ventilanordnung 110 folgende Anschlußbelegung auf. Der zweite und der dritte Anschluß 34, 36 sind zusammengeführt und über eine Leitung 85 mit der Bremse 86 verbunden. Der erste Anschluß 32 ist an den Ausgang 106a des Druckspeichers 106 angeschlossen, der vierte und der fünfte Anschluß 38, 100 sind mit dem Reservoir 107 verbunden.

In der unbestromten Grundstellung (V.) ist die Radbremse 86 direkt mit dem Reservoir 107 verbunden, während die Anschlüsse 32, 36, 38 gesperrt sind, so daß kein Bremsdruck an der Radbremse 86 ansteht und das zugehörige Fahrzeugrad freigängig ist. Bei Anforderung eines Bremseneingriffs durch die elektronische Steuerung wird durch geeignete Bestromung der Spule 12 zwischen den Schaltstellungen I. (ungeregelter Druckaufbauphase), II. (Druckhaltephase), III. (Druckabbauphase) und IV. (geregelter Druckaufbau) so umgeschaltet, daß jeder gewünschte Druckverlauf an der Radbremse 86 einstellbar ist. Da der fünfte Anschluß 100 dabei stets abgesperrt ist und mit der Ausnahme, daß gegenüber Fig. 4 der Druckspeicher 106 anstelle des Hauptbremszylinders 74 den Bremsdruck bereitstellt, stimmt die Funktionsweise der Ventilanordnung 110 in den Schaltstellungen I., II., II. und IV. mit der der Ausführungen nach Fig. 1 oder Fig. 3 überein.

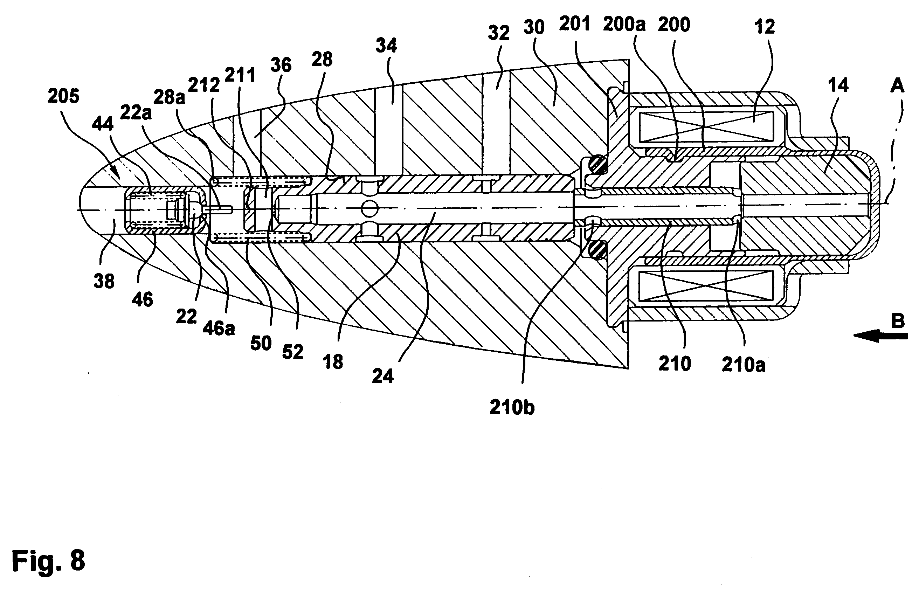

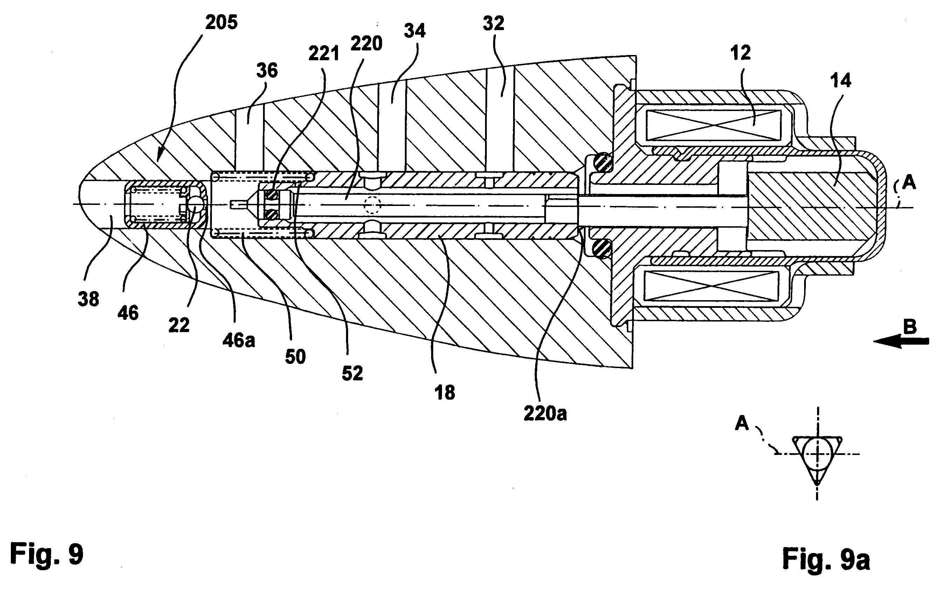

Hauptmerkmal der Ausführungsformen nach Fig. 8 und 9 ist, daß die Anordnung des ersten Ventilgliedes 18 und der Elektromagnetanordnung 12, 14 längs der Mittelachse A gegenüber den Ausführungsformen nach Fig. 1, 3 und 6 vertauscht ist. Dadurch ergeben sich die Vorteile, daß zum einen die Ventilanordnung kompakter und damit Einbauraum sparender baut, zum anderen die Spule 12 der Elektromagnetanordnung 12, 14 außerhalb des Gehäuses 30 angeordnet ist, so daß die zum Betrieb der Elektromagnetanordnung 12, 14 notwendige elektrische Kontaktierung der Spule 12 einfacher und sicherer ausführbar ist.

Bei den Ausführungsformen nach Fig. 8 und 9 wird das erste Ventilglied 18 unter Einwirkung der dritten Federanordnung 50, die sich an einem Absatz 28a der zylinderförmigen Bohrung 28 abstützt, gegen die Betätigungsrichtung B des Ankers 14 vorgespannt. Dabei stützt sich der Anker 14 an einem domförmigen Verschlußdeckel 200 ab. Der domförmige Verschlußdeckel 200 ist mit dem für die Elektromagnetanordnung 12, 14 vorgesehenen Aufnahmekörper 201 fest verbunden. Dazu wird der domförmige Verschlußdeckel 201 vorzugsweise mit dem Aufnahmekörper 201 an der Stelle 200a verstemmt. Dadurch ergibt sich bei der Montage der Ventilanordnung der Vorteil, daß vor dem Verstemmen der axiale magnetische Luftspalt oder auch die Vorspannkraft der dritten Federanordnung 50 präzise einstellbar sind.

Weiterhin entfällt bei den Ausführungen nach Fig. 8 und 9 im Vergleich zu den Ausführungsformen nach fig. 1, 3 und 6 die erste Federanordnung 26. Dadurch gehen bei Funktion der Ventilanordnung in der Regelstellung (IV.) in eine Kräftebilanz an dem Anker 14 die von der Spule 12 erzeugte elektromagnetische Kraft F12, die an der Blende 52 in Folge eines Durchströmens von Druckmedium erzeugte Differenz-Druckkraft F52 sowie die Kraft der dritten Federanordnung F50 in die Betrachtung ein. Da auch hierbei die Federkraft F50 nur vom Weg abhängt, der in der Regelstellung (IV.) nahezu als konstant angenommen werden kann, wird aufgrund des Gleichgewichts der Kräfte durch Änderung der elektromagnetischen Kraft F12 auch eine Änderung der durch die Strömung an der Blende 52 hervorgerufenen Kraft F52 bewirkt, die über die an der Blende anstehenden Druckdifferenz den Volumenstrom durch die Blende 52 bestimmt. Somit ergeben sich in der Funktionsweise der Ventilanordnung durch Entfall der ersten Federanordnung 26 keine Veränderungen.

Die Ausführungen nach Fig. 8 und Fig. 9 weisen wie die Ausführungsform nach Fig. 1 ein Ventilglied 22 auf, das mit einem Ventilsitz 46 zusammenwirkt, um den vierten Anschluß 38 zu sperren bzw. zu öffnen. Dabei wird das Ventilglied 22 durch eine zweite Federanordnung 44 gegen den Ventilsitz 46 gedrückt, um einen Durchlaß 46a, der in dem Ventilsitz 46 ausgebildet ist, zu sperren. Der Ventilsitz 46 ist hülsenförmig ausgestaltet und koaxial zur Achse A angeordnet, so daß er die zweite Federanordnung 44 umschließt. Auf der dem Durchlaß 46a gegenüberliegenden Seite weist der hülsenförmige Ventilsitz 46 einen zur Innenseite gezogenen Kragen auf, an dem sich die zweite Federanordnung 44 abstützt. Dadurch bilden das Ventilglied 22, der Ventilsitz 46 und die zweite Federanordnung 44 eine eigenständig handhabbare Ventilbaugruppe 205, die bei der Montage in dem durch den Absatz 28a im Durchmesser verringerten Bereich der Bohrung 28 im Preßsitz aufgenommen ist.

Bei der Ausführungsform nach Fig. 1 ist eine Betätigungseinrichtung 20 mit dem Anker 14 verbunden, die an ihrem vorderen Ende eine stiftförmige Verjüngung 20a aufweist, um das Ventilglied 22 von dem Ventilsitz 46 gegen die Kraft der zweiten Federanordnung 44 abzuheben. Eine unmittelbare Betätigung des Ventilglieds 22 durch den Anker 14 ist bei den Ausführungen nach Fig. 8 und 9 aufgrund der gegenüber Fig. 1 vertauschten Anordnung des ersten Ventilgliedes 18 und der Elektromagnetanordnung 12, 14 jedoch nicht möglich. Zwar ist das erste Ventilglied 18 mit dem Anker 14 betrieblich gekoppelt, allerdings würde sich die Verbindung einer Betätigungseinrichtung 20 mit dem ersten Ventilglied 18 als nachteilig erweisen, da sich dadurch die Massenträgheit des ersten Ventilglieds 18 erhöhen würde, was die vorerwähnte Kräftebilanz in der Regelstellung (IV.) stören könnte, wodurch die Funktionsweise der Ventilanordnung negativ beeinträchtigt würde. Insbesondere ist eine Störung der Kräftebilanz in der Regelstellung (IV.) durch auf das erste Ventilglied 18 einwirkende Querkräfte zu vermeiden. Zur Lösung dieser Problematik zeigen die Ausführungen nach Fig. 8 und 9 jeweils unterschiedliche Betätigungen des Ventilglieds 22.

Bei der Ausführung nach Fig. 8 ist zwischen dem Anker 14 und dem ersten Ventilglied 18 zu deren betrieblicher Kopplung eine Hülse 205 angeordnet, die aus einem antimagnetischen Material besteht und koaxial zur Achse A in dem Aufnahmekörper 201 geführt ist. Weiterhin weist die Hülse 210 Querbohrungen 210a, 210b auf, durch die bei Bewegung des Ankers 14 bzw. des ersten Ventilglieds 18 Hydraulikfluid fließen kann, so daß stets ein ausgeglichener Druck gewährleistet ist. Das erste Ventilglied 18 weist in dem Kanal 24 eine axial angeordnete Druckverringerungsstufe 52 auf, über die in der Regelstellung (IV.) von dem ersten Anschluß 32 einströmendes Hydraulikfluid über einen radial angeordneten Kanal 211 zu dem dritten Anschluß 36 strömen kann.

An der der Ventilbaugruppe 205 zugewandten Seite ist an dem ersten Ventilglied 18 eine zentrale Aufnahme 212 ausgestaltet, um ein stiftförmiges Betätigungselement 22a für das Ventilglied 22 aufzunehmen. Das stiftförmige Betätigungselement 22a ist mit dem Ventilglied 22 einstückig verbunden und durchdringt unter Ausbildung eines Ringspaltes den Durchlaß 46a in dem Ventilsitz 46. Eine Betätigung des Ventilgliedes 205 erfolgt durch Beaufschlagung der Spule 12 mit einem Strom $I_2$ derartiger Stärke, daß der Anker 14 das erste Ventilglied 18 gegen die Kraft der dritten Federanordnung 50 soweit in Richtung auf das Ventilglied 22 verschiebt, daß zunächst das stiftförmige Betätigungselement 22a in der Aufnahme 212 aufgenommen wird und anschließend gegen die Kraft der zweiten Federanordnung 44 das Ventilglied 22 verschoben wird. Dadurch nimmt die Ventilanordnung die gemäß Fig. 2c dritte Stellung (III.) ein, wobei der dritte Anschluß 36 mit dem vierten Anschluß 38 in Strömungsverbindung steht.

Bei Einsatz der Ventilanordnung in dem in Fig. 4 dargestellten Bremssystem mit Antiblockierregelung wird in der dritten Stellung (III.) der Bremsdruck in der Bremse 86 abgebaut, da das Hydraulikfluid von der Bremse 86 in den Druckspeicher 84 abfließen kann. Zur Verkürzung des Bremsweges ist in vielen Fällen eine Drosselung des Druckabbaues erforderlich. Eine diesem Zweck dienende Drosselwirkung kann durch entsprechende Bemessung des von dem stiftförmigen Betätigungselement 22a mit dem Durchlaß 46a ausgebildeten Ringspaltes erfolgen. Da das stiftförmige Betätigungselement 22a und der Durchlaß 46a in dem Ventilsitz 46 feste Bestandteile der eigenständig handhabbaren Ventilbaugruppe 205 sind, kann eine fahrzeugspezifisch gewünschte Bemessung der Drosselung durch entsprechende Auslegung der Ventilbaugruppe 205 erfolgen, so daß sämtliche anderen Komponenten der Ventilanordnung standardisiert, also fahrzeugunabhängig ausgeführt werden können. Dieser Vorteil ist insbesondere auch dann von Bedeutung, wenn eine unterschiedliche Bemessung der Drosselung an den einzelnen Fahrzeugachsen gewünscht wird, da in diesem Fall lediglich unterschiedlich ausgelegte Ventilbaugruppen 205 für die den einzelnen Fahrzeugachsen zugeordneten Ventilanordnungen zu verwenden sind.

Bei der Ausführung nach Fig. 9 erfolgt die Betätigung des Ventilglieds 22 über ein Betätigungselement 220. Das Betätigungselement 220 ist axial zu dem ersten Ventilglied 18 angeordnet und durch ein ringförmiges Dichtungselement 221, beispielsweise einen Kunststoffring (z.B. aus Teflon), abgedichtet. Die Druckverringerungsstufe 52 ist hierbei radial nach außen geführt. An der dem Anker 14 zugewandten Seite hat das Betätigungselement 220 eindreieckförmiges Profil, wie aus Fig. 9a hervorgeht. Durch Verringerung des Umkreisradius des dreieckförmigen Profils des Betätigungselementes 220 entsteht ein Absatz 220a, über den das Betätigungselement 220 bei Betätigung des Ankers 14 das erste Ventilglied 18 in Betätigungsrichtung B verschiebt. Das Betätigungselement 220 ist an seinem vorderen Ende als Stift 220b ausgebildet, um das Ventilglied 22 zu betätigen.

Bei den Ausführungsformen nach Fig. 8 und 9 ist der Ventilsitz 46 wie bereits erwähnt im Preßsitz aufgenommen. Dabei erweist sich als Vorteil, daß zur Einstellung des Ventilhubs zum Abheben des Ventilglieds 22 von dem Ventilsitz 46, der Ventilsitz 46 im betätigten, der dritten Stellung (III.) entsprechenden Zustand eingepreßt wird, so daß auf einfache Weise ein Toleranzausgleich erreicht wird.

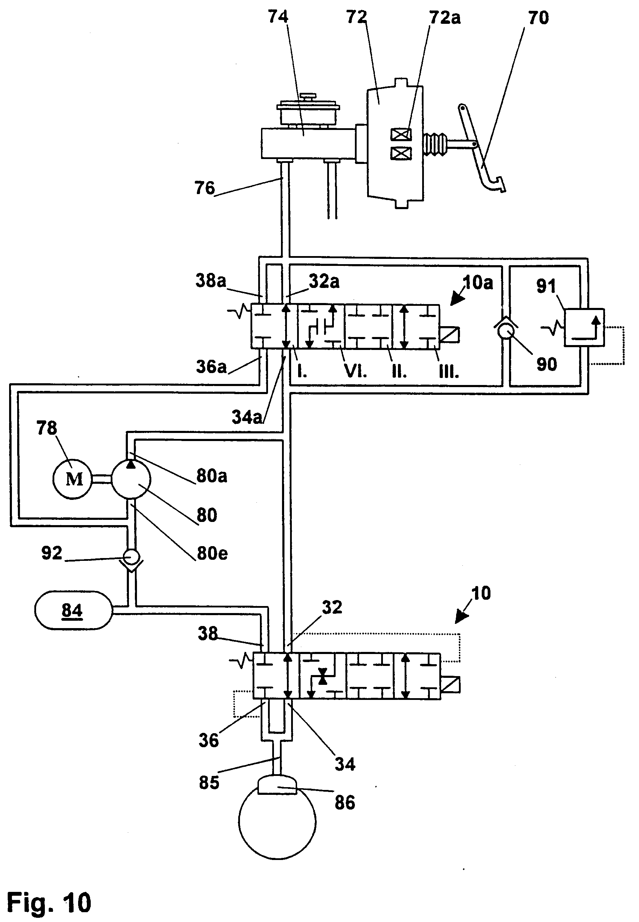

Das in Fig. 10 gezeigte schematische Fahrzeugbremssystem weist wie das in Fig. 4 schematisch gezeigte Fahrzeugbremssystem eine elektromagnetische Ventilanordnung 10 gemäß Fig. 1, Fig. 3, Fig. 8 oder Fig. 9 auf, durch die der Bremsdruck in der Radbremse 86 durch Einstellung von Druckhalte-, Druckabbau- sowie insbesondere Druckaufbauphasen mit variablem Druckaufbaugradienten beliebig moduliert werden kann.

Gegenüber dem in Fig. 4 schematisch gezeigten Fahrzeugbremssystem, das insbesondere zur Antiblockierregelung dient, ist das in Fig. 10 schematisch gezeigte Fahrzeugbremssystem erweitert um unter anderem zur Antriebsschlupf- sowie Fahrdynamikregelung besonders geeignet zu sein. Dazu ist in der Leitung 76, die den Hauptbremszylinder 74 mit dem ersten Anschluß 32 der Ventilanordnung 10 verbindet, eine gegenüber der Ventilanordnung 10 modifizierte Ventilanordnung 10a angeordnet, die wie die Ventilanordnung 10 einen ersten, einen zweiten, einen dritten und einen vierten Anschluß 32a, 34a, 36a, 38a aufweist. Dabei wird der erste und der vierte Anschluß 32a, 38a der modifizierten Ventilanordnung 10a mit dem Hauptbremszylinder 74 verbunden, der zweite Anschluß 34a der modifizierten Ventilanordnung 10a ist mit dem ersten Anschluß 32 der Ventilanordnung 10 verbunden, und der dritte Anschluß 36a der modifizierten Ventilanordnung 10a ist mit der Saugseite 80e der Pumpenanordnung 78, 80 verbunden.

Die Ventilanordnung 10a ist gegenüber der Ventilanordnung 10 nur dahingehend modifiziert, daß in der vierten Stellung (IV.) der erste Anschluß 32a, der zweite Anschluß 34a, der dritte Anschluß 36a und der vierte Anschluß 38a gesperrt sind.

Dies bedeutet, daß die vierte Stellung (IV.) mit der dritten Stellung (III.) übereinstimmt. Hierbei ist wie bei der Ventilanordnung 10 die erste Stellung (I.) die unbetätigte Grundstellung. Ebenso werden die zweite Stellung (II.) bzw. die dritte Stellung (III.) entsprechend einer bestimmten Bestromung über einen Strom $I_1$ bzw. einen Strom $I_2$ eingestellt.

Die Modifikation ist auf einfache Weise im Bereich der Druckverringerungsstufe 52 an dem ersten Ventilglied 18 herzustellen. Ist beispielsweise die Druckverringerungsstufe 52 als Bohrung mit einem vorbestimmten Durchmesser ausgeführt, so kann die Modifikation durch Auslassen dieser Bohrung erfolgen. Falls für die Druckverringerungsstufe 52 eine separate Blende eingesetzt wird, so kann die Modifikation durch Einsetzen eines fluidundurchlässigen Verschlusses anstelle der Blende erfolgen.

Mit Ausnahme dieser einfachen Modifikation im Bereich der Druckverringerungsstufe 52 sind die Ventilanordnungen 10, 10a grundsätzlich baugleich. Da für ein Fahrzeugbremssystem mit zwei Bremskreisen zur Versorgung von jeweils zwei Radbremsen, das wie in Fig. 10 auch zur Antriebsschlupf- sowie Fahrdynamikregelung erweitert ist, insgesamt sechs elektromagnetische Ventilanordnungen 10, 10a benötigt werden (pro Bremskreis eine modifizierte Ventilanordnung 10a und pro Radbremse eine Ventilanordnung 10), lassen sich aufgrund der standardisierten Verwendung baugleicher elektromagnetischer Ventilanordnungen 10, 10a deutliche Kostenvorteile erzielen. Darüber hinaus läßt sich die sogenannte Modulatoreinheit, in der in bekannter Weise die elektromagnetischen Ventilanordnungen 10, 10a und die Pumpenanordnung(en) 78, 80 zusammengeschaltet sind, kompakt und somit Einbauraum sparend ausführen. Weiterhin lassen sich Einsparungen im Bereich der (nicht gezeigten) elektronischen Ansteuervorrichtung erzielen. Zum einen können die elektronischen Komponenten, beispielsweise Ansteuerschaltungen, Leistungsendstufen, Überwachungsschaltungen, sowie auch die Software, zum Betrieb der elektromagnetischen Ventilanordnungen 10, 10a standardisiert und somit kostengünstig ausgeführt werden. Zum anderen kann die (nicht gezeigte) elektronische Ansteuervorrichtung kompakt und somit platzsparend ausgeführt werden, da elektronische Komponenten für insgesamt nur sechs Ventilanordnungen 10, 10a benötigt werden.

Das in Fig. 10 schematisch dargestellte Fahrzeugbremssystem unterscheidet sich gegenüber dem in Fig. 4 schematisch dargestellten Fahrzeugbremssystem weiterhin dadurch, daß zwischen dem Speicher 84 und der Saugseite 80e der Pumpenanordnung 78, 80 ein erstes Rückschlagventil 92 angeordnet ist, über das eine Strömungsverbindung nur in Richtung von dem Speicher 84 zu der Saugseite 80e der Pumpenanordnung 78 80 herstellbar ist, zwischen dem ersten bzw. vierten Anschluß 32a, 38a und dem zweiten Anschluß 34a ein zweites Rückschlagventil 90 angeordnet ist, über das eine Strömungsverbindung nur in Richtung von dem Hauptbremszylinder 74 zu dem ersten Anschluß 32 der Ventilanordnung 10 herstellbar ist, sowie zwischen dem ersten bzw. vierten Anschluß 32a, 38a und dem zweiten Anschluß 34a ein Druckbegrenzungsventil 91 angeordnet ist, über das eine Strömungsverbindung von der Druckseite 80a der Pumpenanordnung 78, 80 zu dem Hauptbremszylinder

74 herstellbar ist, wenn der Druck an der Druckseite 80a der Pumpenanordnung 78, 80 einen voreingestellten Grenzwert überschreitet.

Vorzugsweise zeichnet sich das in Fig. 10 schematisch dargestellte Fahrzeugbremssystem auch dadurch aus, daS der Bremskraftverstärker 72 über eine Elektromagnetanordnung 72a unabhängig von einer Betätigung über das Bremspedal 70 betätigbar ist.

Für Normalbremsungen und zur Antiblockierregelung nimmt die modifizierte Ventilanordnung 10a die erste (unbetätigte) Stellung (I.) ein, in der eine Verbindung vom Hauptbremszylinder 74 zum ersten Anschluß 32 der Ventilanordnung 10 bzw. zur Radbremse 86 besteht, während die Verbindung vom Hauptbremszylinder 74 zur Saugseite 80e der Pumpenanordnung 78, 80 gesperrt ist. Der Ablauf einer Antiblockierregelung stimmt mit der Ausführung gemäß Fig. 4 überein. Bei der Ausführungsform gemäß Fig. 10 wird die erste (unbetätigte) Stellung (I.) auch dann eingestellt, wenn der Bremskraftverstärker 72 über die Elektromagnetanordnung 72a betätigt wird, um eine Not- bzw. Zielbremsung durchzuführen.

Zur Antriebsschlupfregelung nimmt die modifizierte Ventilanordnung 10a die dritte Stellung (III.) ein, in der eine Verbindung vom Hauptbremszylinder 74 zur Saugseite 80e der Pumpenanordnung 78, 89 besteht, während die Verbindung vom Hauptbremszylinder 74 zum ersten Anschluß 32 der Ventilanordnung 10 bzw. zur Radbremse 86 gesperrt ist. Dadurch kann die Pumpenanordnung 78, 80 Bremsfluid über den Hauptbremszylinder 74 ansaugen und unmittelbar zum ersten Anschluß 32 der Ventilanordnung 10 bzw. zur Radbremse 86 fördern, um einem Durchdrehen des zugehörigen Fahrzeugrades entgegenzuwirken.

Bei einer Fahrdynamikregelung, die dazu dient die Stabilität des Fahrzeugs insbesondere beim Fahren in einer Kurve durch automatisches Bremsen zu verbessern, wird die modifizierte Ventilanordnung 10a zunächst in die dritte Stellung (III.) geschaltet, in der eine Verbindung vom Hauptbremszylinder 74 zur Saugseite 80e der Pumpenanordnung 78, 80 besteht, während die Verbindung vom Hauptbremszylinder 74 zum ersten Anschluß 32 der Ventilanordnung 10 bzw. zur Radbremse 86 gesperrt ist. Gleichzeitig wird der Bremskraftverstärker 72 über die Elektromagnetanordnung 72a betätigt und die Pumpenanordnung 78, 80 wird in Betrieb genommen. Damit erfolgt ein Vorfüllen der Pumpe 80 über deren Saugseite 80e, wodurch erreicht wird, daß bereits während der Anlaufphase an der Druckseite 80a der Pumpe 80 ein ausreichendes Druckniveau bereitsteht. Nach der Anlaufphase der Pumpe 80 wird die Betätigung des Bremskraftverstärkers 72 über die Elektromagnetanordnung 72a ganz oder teilweise zurückgenommen und die modifizierte Ventilanordnung 10a wird in die zweite Stellung (II.) geschaltet, in der sowohl die Verbindung vom Hauptbremszylinder 74 zum ersten Anschluß 32 der Ventilanordnung 10 bzw. zur Radbremse 86 als auch die Verbindung vom Hauptbremszylinder 74 zur Saugseite 80e der Pumpenanordnung 78, 80 gesperrt ist, Während sich die modifizierte Ventilanordnung 10a in der zweiten Stellung (II.) befindet, erfolgt die Druckbereitstellung durch die Pumpenanordnung 78, 80 und die Druckmodulation in bekannter Weise über die Ventilanordnung 10.

Das erste Rückschlagventil 92 dient dazu beim Vorfüllen der Pumpe 80, wenn sich die modifizierte Ventilanordnung 10a in der dritten Stellung (III.) befindet, ein Entweichen von Bremsfluid in den Speicher 84 zu verhindern. Es ist auch möglich das hier im Zusammenhang mit einer Fahrdynamikregelung beschriebene Vorfüllen der Pumpe 80 gleichfalls bei einer Antriebsschlupfregelung anzuwenden, um die Leistungsfähigkeit zu erhöhen.

Während einer Fahrdynamikregelung, wenn sich die modifizierte Ventilanordnung 10a in der zweiten Stellung (II.) befindet, dient das zweite Rückschlagventil 90 dazu, eine Beaufschlagung der Radbremse 86 mit Bremsfluid vom Hauptbremszylinder 74 aus zu ermöglichen, wenn eine Betätigung des Bremskraftverstärkers 72 entweder über das Bremspedal 70 oder über die Elektromagnetanordnung 72 erfolgt. Dies kann beispielsweise dann der Fall sein, wenn der Fahrer eine Fahrdynamikregelung abzubrechen wünscht, um eine Not- bzw. Zielbremsung auszuführen. Somit wird ein nicht unerheblicher Beitrag zur Erhöhung der Systemsicherheit beigetragen.

Um das Fahrzeugbremssystem vor Schäden und einem damit verbundenen Ausfall zu bewahren, dient das Druckbegrenzungsventil 91 dazu, daß eine Druckentlastung zu dem Hauptbremszylinder 74 hin stattfinden kann, wenn bei gesperrter Verbindung zwischen dem Hauptbremszylinder 74 und dem ersten Anschluß 32 der Ventilanordnung 10 bzw. der Radbremse 86 - in der zweiten und dritten Stellung (II und III) der Ventilanordnung 10 - der Druck an der Druckseite 80a der Pumpenanordnung 78, 80 einen voreingestellten Grenzwert überschreitet.

**Patentansprüche**

1.  Elektromagnetische Ventilanordnung für ein Druckmedium eines Fahrzeugbremssystems, mit

    -   einer Elektromagnetanordnung (12, 14), die mit
    -   einer in mehrere Stellungen (I, II, III, IV) bringbaren Ventilschließeinrichtung (18, 22) gekoppelt ist,
    -   einem Gehäuse (30) mit einem ersten, einem zweiten, einem dritten und einem vierten Anschluß (32, 34, 36, 38), von denen
    -   in einer ersten Stellung (I.)

        -- der erste Anschluß (32) und der zweite Anschluß (34) miteinander in Strömungsverbindung stehen, und
        -- der dritte Anschluß (36) und der vierte Anschluß (38) gesperrt sind,

    -   in einer zweiten Stellung (II.)

        -- der erste Anschluß (32), der zweite Anschluß (34), der dritte Anschluß (36) und der vierte Anschluß (38) gesperrt sind,

    -   in einer dritten Stellung (III.)

        -- der erste Anschluß (32) und der zweite Anschluß (34) gesperrt sind, und
        -- der dritte Anschluß (36) und der vierte Anschluß (38) miteinander verbunden sind, und

    -   in einer vierten Stellung (IV.)

        -- der erste Anschluß (32) und der dritte Anschluß (36) miteinander verbunden sind, und
        -- der zweite Anschluß (34) und der vierte Anschluß (38) gesperrt sind.

2.  Elektromagnetische Ventilanordnung nach Anspruch 1, dadurch gekennzeichnet, daß

    -   dem ersten Ventilglied (18) eine Druckverringerungsstufe (52) zugeordnet ist, die in dem Druckmedium herrschenden Druck zwischen zumindest zwei Auslässen (32, 36) reduziert.

3.  Elektromagnetische Ventilanordnung nach einem der Ansprüche 1 oder 2, dadurch gekennzeichnet, daß

    -   die Ventilschließeinrichtung (18, 22) ein mit einem Anker (14) der Elektromagnetanordnung (12, 14) gekoppeltes erstes Ventilglied (18) aufweist.

4.  Elektromagnetische Ventilanordnung nach einem der Ansprüche 1, 2 oder 3, dadurch gekennzeichnet, daß

    -   die Ventilschließeinrichtung (18, 22) ein zweites Ventilglied (22) und vorzugsweise eine mit dem Anker (14) der Elektromagnetanordnung (12, 14) gekoppelte Betätigungseinrichtung (20) für das zweite Ventilglied (22) aufweist.

5.  Elektromagnetische Ventilanordnung nach einem der Ansprüche 1 bis 4, dadurch gekennzeichnet, daß

    -   das erste Ventilglied (18) durch eine erste Federanordnung (26) gegen den Anker (14) der Elektromagnetanordnung (12, 14) vorgespannt ist.

6. Elektromagnetische Ventilanordnung nach einem der Ansprüche 1 bis 5, dadurch gekennzeichnet, daß

- das zweite Ventilglied (22) durch eine zweite Federanordnung (44) gegen einen Ventilsitz (46) vorgespannt ist.

7. Elektromagnetische Ventilanordnung nach einem der Ansprüche 1 bis 6, dadurch gekennzeichnet, daß

- der Anker (14) der Elektromagnetanordnung (12, 14) durch eine dritte Federanordnung (50) entgegen der Betätigungsrichtung (B) des ersten Ventilgliedes (18) vorgespannt ist.

8. Elektromagnetische Ventilanordnung nach dem vorhergehenden Anspruch, dadurch gekennzeichnet, daß

- die dritte Federanordnung (50) einerseits gegen das Gehäuse (30) oder den Ventilsitz (46) und andererseits gegen den Anker (14) abgestützt ist.

9. Elektromagnetische Ventilanordnung nach einem oder mehreren der vorhergehenden Ansprüche, dadurch gekennzeichnet, daß

- das erste Ventilglied (18) einen Kanal (24) aufweist, der in Abhängigkeit von der Stellung des Ventilgliedes (18) über Durchlässe (18a, 18b, 18c) und/oder Ringkanäle (18d, 18e, 19f) mit einem oder mehreren der ersten, zweiten, dritten, oder vierten Anschlüsse (32 ... 38) in Strömungsverbindung bringbar oder von diesen trennbar ist.

10. Elektromagnetische Ventilanordnung nach dem vorhergehenden Anspruch, dadurch gekennzeichnet, daß

- die Druckverringerungsstufe (52) in dem Kanal (24) ausgebildet ist und eine Blende (52) mit einer vorbestimmbaren Durchlaßöffnung für das Druckmedium aufweist.

11. Elektromagnetische Ventilanordnung nach den Ansprüchen 6 und 7, dadurch gekennzeichnet, daß

- die erste Federanordnung (26) und die dritte Federanordnung (50) in entgegengesetzten Richtungen gegen den Anker (14) der Elektromagnetanordnung (12, 14) vorgespannt sind.

12. Elektromagnetische Ventilanordnung nach einem oder mehreren der vorhergehenden Ansprüche, dadurch gekennzeichnet, daß

- die erste Federanordnung (26) eine Vorspannkraft (F0, 26) aufweist, die kleiner ist als die Vorspannkraft (F0, 50) der dritten Federanordnung (50).

13. Elektromagnetische Ventilanordnung nach einem oder mehreren der vorhergehenden Ansprüche, dadurch gekennzeichnet, daß

- bei einer Betätigung der Elektromagnetanordnung, um die Ventilschließeinrichtung aus der ersten Stellung (I.), in der die Elektromagnetanordnung (12, 14) unbetätigt ist, in eine andere Stellung (II, III, IV) zu bringen, in der die Elektromagnetanordnung (12, 14) betätigt ist, die dritte Federanordnung (50) durch die Magnetkraft (F12) der Elektromagnetanordnung (12, 14), die Federkraft (F26) der ersten Federanordnung (26) und eine aus einer ggf. vorhandenen Druckdifferenz an der Druckverringerungsstufe (52) resultierende Kraft (F52) komprimierbar ist.

14. Elektromagnetische Ventilanordnung nach einem oder mehreren der vorhergehenden Ansprüche, dadurch gekennzeichnet, daß

- die Elektromagnetanordnung (12, 14) einen Proportionalelektromagneten aufweist, der durch Beaufschlagung mit Strom unterschiedlicher Stärke die Ventilschließeinrichtung (18, 22) in unterschiedliche Stellungen (I .. IV) bringt.

15. Elektromagnetische Ventilanordung nach einem oder mehreren der vorhergehenden Ansprüche, dadurch gekennzeichnet, daß

- in einer betätigten Stellung (III.), in der die Ventilschließeinrichtung (18, 22) aus der unbetätigten Stellung (I.) maximal ausgelenkt ist, die Federkraft (F26) der ersten Federanordnung (26) größer oder gleich Null ist.

16. Elektromagnetische Ventilanordnung nach einem oder mehreren der vorhergehenden Ansprüche, dadurch gekennzeichnet, daß

- in dem ersten Ventilglied (18) der den ersten Anschluß (32) mit dem Kanal (24) verbindende bzw. trennende Ringkanal (18f) so ausrichtbar ist, daß sich bei einer vorhandenen Druckdifferenz an der Druckverringerungsstufe (52) eine bestimmte Durchtrittsfläche (32a) für Druckmedium in den Ringkanal (18f) einstellt.

17. Elektromagnetische Ventilanordnung nach dem vorhergehenden Anspruch, dadurch gekennzeichnet, daß

- in Abhängigkeit von dem Strom durch die Elektromagnetanordnung (12, 14) die Strömung des Druckmediums an der Druckverringerungsstufe (52) so veränderbar ist, daß sich bei einem geringen Strom durch die Elektromagnetanordnung (12, 14) ein größerer Druckaufbaugradient und bei einem höheren Strom durch die Elektromagnetanordnung (12, 14) ein kleinerer Druckaufbaugradient an dem der Druckverringerungsstufe (52) stromabwärts zugeordneten Auslaß (36) einstellt.

18. Fahrzeugbremssystem mit

- einer elektromagnetischen Ventilanordnung nach einem oder mehreren der vorhergehenden Ansprüche,
- einem über ein Bremspedal (70) betätigbaren Bremskraftverstärker (72), der auf einen Hauptbremszylinder (74) wirkt,
- einer Pumpenanordnung (78, 80) für Druckmedium, der ein Speicher (84) für das Druckmedium zugeordnet ist, sowie wenigstens einer Bremsvorrichtung (86), dadurch gekennzeichnet, daß
- der erste Anschluß (32) der Ventilanordnung (10) mit dem Hauptbremszylinder (74) verbunden ist,
- der zweite und der dritte Anschluß (34, 36) der Ventilanordnung (10) mit der Bremsvorrichtung (86) verbunden sind, und
- der vierte Anschluß (38) der Ventilanordnung (10) mit dem Druckspeicher (84) und/oder der Pumpenanordnung (78, 80) verbunden ist.

19. Elektromagnetische Ventilanordnung nach Anspruch 1, dadurch gekennzeichnet, daß

- die Ventilschließeinrichtung (18, 22) in eine fünfte Stellung (V) bringbar ist, und
- das Gehäuse (30) einen fünften Anschluß (100) aufweist, wobei - in der fünften Stellung (V)

  -- der zweite Anschluß (34) und der fünfte Anschluß (100) miteinander in Strömungsverbindung stehen, und
  -- der erste Anschluß (32), der dritte Anschluß (36) und der vierte Anschluß (38) gesperrt sind.

20. Elektromagnetische Ventilanordnung nach Anspruch 19, dadurch gekennzeichnet, daß

der fünfte Anschluß (100) in den anderen Stellungen (I, II, III, IV) gesperrt ist.

21. Fahrzeugbremssystem mit

- einer elektromagnetischen Ventilanordnung (110) nach Anspruch 20,
- einer Sensoreinrichtung (101) zum Erfassen von an einem Bremspedal (70) auftretenden statischen und dynamischen Zuständen,
- mit einer elektronischen Steuervorrichtung zur Erzeugung von Steuersignalen für die elektromagnetische Ventilanordnung (110) in Abhängigkeit von den an dem Bremspedal (70) auftretenden statischen und dynamischen Zuständen,
- einer unter Druck stehendes Hydraulikfluid liefernden Quelle (105, 106),
- einem Reservoir (107) für Druckmedium, sowie
- wenigstens einer Bremsvorrichtung (86) dadurch gekennzeichnet, daß
- der erste Anschluß (32) der Ventilanordnung (110) mit der unter Druck stehendes Hydraulikfluid liefernden Quelle (105, 106) verbunden ist,
- der zweite und der dritte Anschluß (34, 36) der Ventilanordnung (110) mit der Bremsvorrichtung (86) verbunden sind, und
- der vierte und fünfte Anschluß (38, 100) der Ventilanordnung (110) mit dem Reservoir (107) verbunden sind.

22. Fahrzeugbremssystem nach Anspruch 18 oder 21, mit einer Ventilanordnung (10a), die einen ersten, einen zweiten, einen dritten und einen vierten Anschluß (32a, 34a, 36a, 38a) aufweist, wobei der erste und der vierte Anschluß (32a, 38a) mit dem Hauptbremszylinder (74) verbunden sind, der zweite Anschluß (34a) mit dem ersten Anschluß (32) der Ventilanordnung (10) verbunden ist, und der dritte Anschluß (36a) mit der Saugseite (80e) der Pumpenanordnung (78, 80) verbunden ist.

23. Fahrzeugbremssystem nach Anspruch 22, dadurch gekennzeichnet, daß in der vierten Stellung (IV.) der erste Anschluß (32a), der zweite Anschluß (34a), der dritte Anschluß (36a) und der vierte Anschluß (38a) gesperrt sind.

24. Fahrzeugbremssystem nach den Ansprüchen 21, 22 oder 23, dadurch gekennzeichnet, daß zwischen dem Speicher (84) und der Saugseite (80e) der Pumpenanordnung (78, 80) ein erstes Rückschlagventil (92) angeordnet ist, über das eine Strömungsverbindung nur in Richtung von dem Speicher (84) zu der Saugseite (80e) der Pumpenanordnung (78, 80) herstellbar ist.

25. Fahrzeugbremssystem nach Anspruch 24, dadurch gekennzeichnet, daß zwischen dem ersten bzw. vierten Anschluß (32a, 38a) und dem zweiten Anschluß (34a) ein zweites Rückschlagventil (90) angeordnet ist, über das eine Strömungsverbindung nur in Richtung von dem Hauptbremszylinder (74) zu dem ersten Anschluß (32) der Ventilanordnung (10) herstellbar ist.

26. Fahrzeugbremssystem nach einem der Ansprüche 24 oder 25, dadurch gekennzeichnet, daß zwischen dem ersten bzw. vierten Anschluß (32a, 38a) und dem zweiten Anschluß (34a) ein Druckbegrenzungsventil (91) angeordnet ist, über das eine Strömungsverbindung von der Druckseite (80a) der Pumpenanordnung (78, 80) zu dem Hauptbremszylinder (74) herstellbar ist, wenn der Druck an der Druckseite 80a der Pumpenanordnung (78, 80) einen voreingestellten Grenzwert überschreitet.

27. Fahrzeugbremssystem nach einem der vorhergehenden Ansprüche, dadurch gekennzeichnet, daß der Bremskraftverstärker (72) über eine Elektromagnetanordnung (72a) unabhängig von einer Betätigung über das Bremspedal (70) betätigbar ist.

**Claims**

1. An electromagnetic valve arrangement for a pressure medium of a vehicle braking system, comprising

   - an electromagnet arrangement (12, 14) which is coupled with a valve closing means (18, 22) which can be brought into several positions (I, II, III, IV);
   - a housing (30) with a first, a second, a third, and a fourth connection (32, 34, 36, 38) of which
   - in a first position (I.)

     -- the first connection (32) and the second connection (34) are in flow connection with each other, and
     -- the third connection (36) and the fourth connection (38) are blocked;

   - in a second position (II.)

     -- the first connection (32), the second connection (34), the third connection (36), and the fourth connection (38) are blocked;

   - in a third position (III.)

     -- the first connection (32) and the second connection (34) are blocked, and
     -- the third connection (36) and the fourth connection (38) are connected with each other; and

   - in a fourth position (IV.)

     -- the first connection (32) and the third connection (36) are connected with each other, and
     -- the second connection (34) and the fourth connection (38) are blocked.

2. The electromagnetic valve arrangement according to Claim 1, characterised in that

   - the first valve member (18) is associated with a pressure reduction stage (52) which reduces the pressure prevailing in the pressure medium between at least two outlets (32, 36).

3. The electromagnetic valve arrangement according to one of Claims 1 or 2, characterised in that

   - the valve closing means (18, 22) comprises a first valve member (18) which is coupled with an armature (14) of the electromagnet arrangement (12, 14).

4. The electromagnetic valve arrangement according to one of Claims 1, 2 or 3, characterised in that

   - the valve closing means (18, 22) comprises a second valve member (22) and an actuation means (20) for the second valve member (22), which is preferably coupled with the armature (14) of the electromagnet arrangement (12, 14).

5. The electromagnetic valve arrangement according to one of Claims 1 to 4, characterised in that

   - the first valve member (18) is biased against the armature (14) of the electromagnet arrangement (12, 14) by a first spring assembly (26).

6. The electromagnetic valve arrangement according to one of Claims 1 to 5, characterised in that

   - the second valve member (22) is biased against a valve seat (46) by a second spring assembly (44).

7. The electromagnetic valve arrangement according to one of Claims 1 to 6, characterised in that

- the armature (14) of the electromagnet arrangement (12, 14) is biased against the activation direction (B) of the first valve member (18) by a third spring arrangement (50).

8. The electromagnetic valve arrangement according to the previous claims, characterised in that

   - the third spring arrangement (50) bears against the housing (30) or the valve seat (46), on the one hand, and against the armature (14), on the other hand.

9. The electromagnetic valve arrangement according to one or several of the previous claims, characterised in that

   - the first valve member (18) comprises a passage (24) which, depending on the position of the valve member (18), can be brought into a flow connection with or disconnected from one or several of the first, second, third, or fourth connection (32, ..., 38) via passages (18a, 18b, 18c) and/or annular ducts (18d, 18e, 19f).

10. The electromagnetic valve arrangement according to the previous claim, characterised in that

    - the pressure reduction stage (52) is formed in the passage (24) and comprises a diaphragm (52) with a predeterminable passage for the pressure medium.

11. The electromagnetic valve arrangement according to Claims 6 and 7, characterised in that

    - the first spring arrangement (26) and the third spring arrangement (50) are biased in opposite directions against the armature (14) of the electromagnet arrangement (12, 14).

12. The electromagnetic valve arrangement according to one or several of the previous claims, characterised in that

    - the first spring arrangement (26) has a biasing force (F0, 26) which is smaller than the biasing force (F0, 50) of the third spring arrangement (50).

13. The electromagnetic valve arrangement according to one or several of the previous claims, characterised in that

    - in the case of an actuation of the electromagnet arrangement in order to bring the valve closing means from the first position (I.) in which the electromagnet arrangement (12, 14) is not actuated into another position (II, III, IV) in which the electromagnet arrangement (12, 14) is acutated, the third spring arrangement (50) is compressible by the magnetic force (F12) of the electromagnet arrangement (12, 14), the spring force (F26) of the first spring arrangement (26) and a force (F52) which results from a pressure difference which may possibly prevail at the pressure reduction stage (52).

14. The electromagnetic valve arrangement according to one or several of the previous claims, characterised in that

    - the electromagnet arrangement (12, 14) comprises a proportional electromagnet which, on application of current of varying amperage, brings the valve closing means (18, 22) into different positions (I, ..., IV).

15. The electromagnetic valve arrangement according to one or several of the previous claims, characterised in that

    - in an actuated position (III.) in which the valve closing means (18, 22) is deflected from the not actuated position (I.) to its maximum the spring force (F26) of the first spring arrangement (26) is greater than or equal to zero.

16. The electromagnetic valve arrangement according to one or several of the previous claims, characterised in that

    - the annular duct (18f) in the first valve member (18), which connects or disconnects, respectively, the first connection (32) with/from the passage (24), can be aligned in such a manner that when a pressure difference prevails at the pressure reduction stage (52) a certain flow area (32a) for the pressure medium entering the annular duct (18f) is obtained.

17. The electromagnetic valve arrangement according to the previous claim, characterised in that

    - depending on the current through the electromagnet arrangement (12, 14) the flow of the pressure medium at the pressure reduction stage (52) can be varied in such a manner that with a low current through the electromagnet arrangement (12, 14) a higher pressure build-up gradient, and with a higher current through the electromagnet arrangement (12, 14) a smaller pressure build-up gradient is obtained at the downstream outlet (36) which is associated with the pressure reduction stage (52).

**18.** A vehicle braking system, comprising

- an electromagnetic valve arrangement according to one or several of the previous claims,
- a brake booster (72) acting upon a master cylinder (74), which can be actuated via a brake pedal (70),
- a pump arrangement (78, 80) for pressure medium which is associated with an accumulator (84) for the pressure medium, as well as at least one brake device (86), characterised in that
- the first connection (32) of the valve arrangement (10) is connected with the master cylinder (74),
- the second and third connection (34, 36) of the valve arrangement (10) are connected with the brake device (86), and
- the fourth connection (38) of the valve arrangement (10) is connected with the pressure accumulator (84) and/or the pump arrangement (78, 80).

**19.** The electromagnetic valve arrangement according to Claim 1, characterised in that

- the valve closing means (18, 22) can be brought into a fifth position (V) and
- the housing (30) is provided with a fifth connection (100), with

    -- the second connection (34) and the fifth connection (100) being in flow connection with each other in the fifth position (V), and
    -- the first connection (32), the third connection (36) and the fourth connection (38) being blocked.

**20.** The electromagnetic valve arrangement according to Claim 19, characterised in that

    the fifth connection (100) is blocked in the other positions (I, II, III, IV).

**21.** A vehicle braking system, comprising

- an electromagnetic valve arrangement (110) according to Claim 20,
- a sensor means (101) for sensing the static and dynamic conditions occurring at a brake pedal (70),
- an electronic control unit for generating control signals for the electromagnetic valve arrangement (110) as a function of the static and dynamic conditions occurring at the brake pedal (70),
- a source (105, 106) supplying pressurised hydraulic fluid,

- a reservoir (107) for pressure medium, as well as
- at least one brake device (86), characterised in that
- the first connection (32) of the valve arrangement (110) is connected with the source (105, 106) supplying pressurised hydraulic fluid,
- the second and the third connection (34, 36) of the valve arrangement (110) are connected with the brake device (86), and
- the fourth and fifth connection (38, 100) of the valve arrangement (110) are connected with the reservoir (107).

**22.** The vehicle braking system according to Claim 18 or 21 with a valve arrangement (10a) which comprises a first, second, third, and fourth connection (32a, 34a, 36a, 38a) with the first and fourth connection (32a, 38a) being connected with the master cylinder (74), the second connection (34a) being connected with the first connection (32) of the valve arrangement (10), and the third connection (36a) being connected with the suction side (80e) of the pump arrangement (78, 80).

**23.** The vehicle braking system according to Claim 22, characterized in that in the fourth position (IV.) the first connection (32a), the second connection (34a), the third connection (36a), and the fourth connection (38a) are blocked.

**24.** The vehicle braking system according to Claims 21, 22, or 23, characterised in that a first non-return valve (92) is arranged between the accumulator (84) and the suction side (80e) of the pump arrangement (78, 80), via which a flow connection can be made only in the direction from the accumulator (84) to the suction side (80e) of the pump arrangement (78, 80).

**25.** The vehicle braking system according to Claim 24, characterised in that a second non-return valve (90) is arranged between the first or the fourth connection (32a, 38a), respectively, and the second connection (34a), via which a flow connection can be made only in the direction from the master cylinder (74) to the first connection (32) of the valve arrangement (10).

**26.** The vehicle braking system according to one of Claims 24 or 25, characterized in that a pressure limiting valve (91) is arranged between the first or the fourth connection (32a, 38a), respectively, and the second connection (34a), via which a flow connection from the pressure side (80a) of the pump arrangement (78, 80) to the master cylinder (74) can be made, if the pressure at the pressure side (80a) of the pump arrangement (78, 80) exceeds a preset limit.

27. The vehicle braking system according to one of the previous claims, characterised in that the brake booster (72) can be actuated via an electromagnet arrangement (72a) independent of an actuation via the brake pedal (70).

**Revendications**

1. Dispositif de distribution et de régulation électromagnétique pour un milieu hydraulique d'un système de freinage de véhicule, comprenant

   - un dispositif électromagnétique (12, 14) qui est couplé avec
   - un moyen de fermeture de vanne (18, 22) pouvant être amené en plusieurs positions (I, II, III, IV),
   - un boîtier (30) pourvu d'un premier, d'un deuxième, d'un troisième et d'un quatrième raccordements (32, 34, 36, 38) dont
   - dans une première position (I.)

     -- le premier raccordement (32) et le deuxième raccordement (34) sont en communication d'écoulement l'un avec l'autre, et
     -- le troisième raccordement (36) et le quatrième raccordement (38) sont fermés,

   - dans une deuxième position (II.)

     -- le premier raccordement (32), le deuxième raccordement (34), le troisième raccordement (36) et le quatrième raccordement (38) sont fermés,

   - dans une troisième position (III.)

     -- le premier raccordement (32) et le deuxième raccordement (34) sont fermés, et
     -- le troisième raccordement (36) et le quatrième raccordement (38) sont reliés entre eux, et

   - dans une quatrième position (IV.)

     -- le premier raccordement (32) et le troisième raccordement (36) sont reliés entre eux, et
     -- le deuxième raccordement (34) et le quatrième raccordement (38) sont fermés.

2. Dispositif de distribution et de régulation électromagnétique selon la revendication 1, caractérisé en ce que

   - un gradin de réduction de pression (52) est associé au premier élément de vanne (18), qui réduit la pression régnant dans le milieu hydraulique entre au moins deux évacuations (32, 36).

3. Dispositif de distribution et de régulation électromagnétique selon l'une des revendications 1 ou 2, caractérisé en ce que

   - le moyen de fermeture de vanne (18, 22) présente un premier élément de vanne couplé avec un induit (14) du dispositif électromagnétique (12, 14).

4. Dispositif de distribution et de régulation électromagnétique selon l'une des revendications 1, 2 ou 3, caractérisé en ce que

   - le moyen de fermeture de vanne (18, 22) présente un deuxième élément de vanne (22) et de préférence un moyen d'actionnement (20) couplé avec l'induit (14) du dispositif électromagnétique (12, 14) pour le deuxième élément de vanne (22).

5. Dispositif de distribution et de régulation électromagnétique selon l'une quelconque des revendications 1 à 4, caractérisé en ce que

   - le premier élément de vanne (18) est poussé en permanence contre l'induit (14) du dispositif électromagnétique (12, 14) par un premier dispositif élastique (26).

6. Dispositif de distribution et de régulation électromagnétique selon l'une quelconque des revendications 1 à 5, caractérisé en ce que

   - le deuxième élément de vanne (22) est poussé en permanence contre un siège de vanne (46) par un deuxième dispositif élastique (44).

7. Dispositif de distribution et de régulation électromagnétique selon l'une quelconque des revendications 1 à 6, caractérisé en ce que

   - l'induit (14) du dispositif électromagnétique (12, 14) est poussé en permanence dans un sens opposé au sens d'actionnement (B) du premier élément de vanne (18) par un troisième dispositif élastique (50).

8. Dispositif de distribution et de régulation électromagnétique selon la revendication précédente, caractérisé en ce que

   - le troisième dispositif élastique (50) s'appuie d'une part contre le boîtier (30) ou le siège de vanne (46) et d'autre part contre l'induit (14).

9. Dispositif de distribution et de régulation électromagnétique selon l'une ou plusieurs des revendications précédentes, caractérisé en ce que

   - le premier siège de vanne (18) présente un canal (24) qui peut être amené, en fonction de la position de l'élément de vanne (18), par l'intermédiaire de passages (18a, 18b, 18c) et/ou de canaux annulaires (18d, 18e, 18f) en communication d'écoulement avec un ou plusieurs des premier, deuxième, troisième ou quatrième raccordements (32 ... 38) ou isolé de ceux-ci.

10. Dispositif de distribution et de régulation électromagnétique selon la revendication précédente, caractérisé en ce que

   - le gradin de réduction de pression (52) est formé dans le canal (24) et présente un obturateur (52) pourvu d'une ouverture de passage pouvant être prédéterminée pour le milieu hydraulique.

11. Dispositif de distribution et de régulation électromagnétique selon les revendications 6 et 7, caractérisé en ce que

   - le premier dispositif élastique (26) et le troisième dispositif élastique (50) poussent en permanence contre l'induit (14) du dispositif électromagnétique (12, 14) dans des sens opposés.

12. Dispositif de distribution et de régulation électromagnétique selon l'une ou plusieurs des revendications précédentes, caractérisé en ce que

   - le premier dispositif élastique (26) présente une force de poussée permanente (F0, 26) qui est inférieure à la force de poussée permanente (F0, 50) du troisième dispositif élastique (50).

13. Dispositif de distribution et de régulation électromagnétique selon l'une ou plusieurs des revendications précédentes, caractérisé en ce que

   - lors d'un actionnement du dispositif électromagnétique pour amener le moyen de fermeture de vanne de la première position (I.), dans laquelle le dispositif électromagnétique (12, 14) n'est pas actionné, dans une deuxième position (II, III, IV), dans laquelle le dispositif électromagnétique (12, 14) est actionné, le troisième dispositif élastique (50) peut être comprimé par la force magnétique (F12) du dispositif électromagnétique (12, 14), la force élastique (F26) du premier dispositif élastique (26) et une force (F52) résultant d'une différence de pression le cas échéant présente au gradin de réduction de pression (52).

14. Dispositif de distribution et de régulation électromagnétique selon l'une ou plusieurs des revendications précédentes, caractérisé en ce que

   - le dispositif électromagnétique (12, 14) présente un électroaimant proportionnel qui, lorsqu'il est alimenté en courant d'intensité différente, amène le moyen de fermeture de vanne (18, 22) dans différentes positions (I ... IV).

15. Dispositif de distribution et de régulation électromagnétique selon l'une ou plusieurs des revendications précédentes, caractérisé en ce que

   - dans une position actionnée (III.) dans laquelle le moyen de fermeture de vanne (18, 22) est éloigné au maximum de la position non actionnée (I.) la force élastique (F26) du premier dispositif élastique (26) est supérieure ou égale à zéro.

16. Dispositif de distribution et de régulation électromagnétique selon l'une ou plusieurs des revendications précédentes, caractérisé en ce que

   - dans le premier élément de vanne (18) le canal annulaire (18f) reliant respectivement isolant le premier raccordement (32) au respectivement du canal (24) peut être ajusté de telle façon que dans le cas d'une différence de pression présente au gradin de réduction de pression (52) une surface de passage déterminée (32a) soit imposée pour le milieu hydraulique dans le canal annulaire (18f).

17. Dispositif de distribution et de régulation électromagnétique selon la revendication précédente, caractérisé en ce que

   - l'écoulement du milieu hydraulique au gradin de réduction de pression (52) peut être modifié en fonction du courant traversant le dispositif électromagnétique (12, 14) de telle façon que pour un courant faible traversant le dispositif électromagnétique (12, 14) un gradient de montée en pression plus important soit imposé et que pour un courant plus fort traversant le dispositif électromagnétique (12, 14) un gradient de montée en pression plus faible soit imposé à l'évacuation (36) associée à l'aval du gradin de réduction de pression (52).

18. Système de freinage de véhicule comprenant

   - un dispositif de distribution et de régulation électromagnétique selon l'une ou plusieurs des revendications précédentes,
   - un servofrein (72) pouvant être actionné par l'intermédiaire d'une pédale de frein (70), qui agit sur un maître cylindre de frein (74),
   - un dispositif de pompage (78, 80) pour un milieu hydraulique, auquel est associé un accumulateur (84) pour le milieu hydraulique, ainsi qu'au moins un dispositif de freinage (86), caractérisé en ce que
   - le premier raccordement (32) du dispositif de distribution et de régulation (10) est relié au maître cylindre de frein (74),
   - le deuxième et le troisième raccordements (34, 36) du dispositif de distribution et de régulation (10) sont reliés au dispositif de freinage (86), et
   - le quatrième raccordement (38) du dispositif de distribution et de régulation (10) est relié à l'accumulateur hydraulique (84) et/ou au dispositif de pompage (78, 80).

19. Dispositif de distribution et de régulation électromagnétique selon la revendication 1, caractérisé en ce que

   - le moyen de fermeture de vanne (18, 22) peut être amené dans une cinquième position (V), et
   - le boitier (30) présente une cinquième raccordement (100),
   - dans laquelle cinquième position (V)

      -- le deuxième raccordement (34) et le cinquième raccordement (100) sont en communication d'écoulement l'un avec l'autre, et
      -- le premier raccordement (32), le troisième raccordement (36) et le quatrième raccordement (38) sont fermés.

20. Dispositif de distribution et de régulation électromagnétique selon la revendication 19, caractérisé en ce que

   le cinquième raccordement (100) est fermé dans les autres positions (I, II, III, IV).

21. Système de freinage de véhicule comprenant

   - un dispositif de distribution et de régulation électromagnétique (110) selon la revendication 20,
   - un moyen de détection (101) pour relever des états statiques et dynamiques apparaissant à une pédale de frein (70),
   - comprenant un dispositif de commande électronique pour générer des signaux de commande pour le dispositif de distribution et de régulation électromagnétique (110) en fonction des états statiques et dynamiques apparaissant à la pédale de frein (70),
   - une source (105, 106) délivrant un fluide hydraulique sous pression,
   - un réservoir (107) pour milieu hydraulique, ainsi que
   - au moins un dispositif de freinage (86) caractérisé en ce que
   - le premier raccordement (32) du dispositif de distribution et de régulation (110) est relié à la source (105, 106) délivrant du fluide hydraulique sous pression,
   - le deuxième et le troisième raccordements (34, 36) du dispositif de distribution et de régulation (110) sont reliés au dispositif de freinage (86), et
   - le quatrième et le cinquième raccordements (38, 100) du dispositif de distribution et de régulation (110) sont reliés au réservoir (107).

22. Système de freinage de véhicule selon la revendication 18 ou 21, comprenant un dispositif de distribution et de régulation (10a) qui présente un premier, un deuxième, un troisième et un quatrième raccordements (32a, 34a, 36a, 38a), le premier et le quatrième raccordements (32a, 38a) étant reliés au maître cylindre de frein (74), le deuxième raccordement (34a) étant relié au premier raccordement (32a) du dispositif de distribution et de régulation (10) et le troisième raccordement (36a) étant relié au côté d'aspiration (80e) du dispositif de pompage (78, 80).

23. Système de freinage de véhicule selon la revendication 22, caractérisé en ce que dans la quatrième position (IV.) le premier raccordement (32a), le deuxième raccordement (34a), le troisième raccordement (36a) et le quatrième raccordement (38a) sont fermés.

24. Système de freinage de véhicule selon les revendications 21, 22, ou 23, caractérisé en ce qu'un premier clapet anti-retour (92) est disposé entre l'accumulateur (84) et le côté d'aspiration (80e) du dispositif de pompage (78, 80), à travers lequel une communication d' écoulement ne peut avoir lieu que dans le sens de l'accumulateur (84) vers le côté d'aspiration (80e) du dispositif de pompage (78, 80).

25. Système de freinage de véhicule selon la revendication 24, caractérisé en ce qu'un deuxième clapet anti-retour (90) est disposé entre le premier respectivement le quatrième raccordement (32a, 38a) et le deuxième raccordement (34a), à travers lequel une communication d'écoulement ne peut avoir lieu que dans le sens du maître cylindre de frein (74) vers le premier raccordement (32) du dispositif de distribution et de régulation (10).

26. Système de freinage de véhicule selon l'une des revendications 24 ou 25, caractérisé en ce qu'un limiteur de pression (91) est disposé entre le premier respectivement le quatrième raccordement (32a, 38a) et le deuxième raccordement (34a), à travers lequel une communication d'écoulement peut avoir lieu du côté de la pression (80a) du dispositif de pompage (78, 80) vers le maître cylindre de frein (74) lorsque la pression du côté de la pression (80a) du dispositif de pompage (78, 80) dépasse une valeur limite réglée à l'avance.

27. Système de freinage de véhicule selon l'une quelconque des revendications précédentes, caractérisé en ce que le servofrein (72) peut être actionné par l'intermédiaire d'un dispositif électromagnétique (72a) indépendamment d'un actionnement de la pédale de frein (70).

**Fig. 1**

EP 0 825 942 B1

EP 0 825 942 B1

**Fig. 2a**

Fig. 2b

Fig. 2c

38 22 48 50 12 14a 60 18d 18a 18 18b 36 34 18a 18f 24 S2 26 32

EP 0 825 942 B1

24

Fig. 2d

**Fig. 3**

DRUCKAUF- UND ABBAU
IN ABS-REGELUNG

DRUCKAUFBAU
NORMALBREMSUNG

110

36

34

24  18b

18c    18a

18d  18e  18f

38

32

HZ- IN

AUSGANG
EXPANDER

EP 0 825 942 B1

**74** **72** **70**

**76**

**78** M **80**

**84** **82**

**10**

**32**

**38**

I. IV. II. III.

**36**

**34**

**85**

**86**

# Fig. 4

Fig. 5

Fig. 6

EP 0 825 942 B1

**Fig. 7**

Fig. 8

**Fig. 9**

**Fig. 9a**

205  221  220  34  32  12  14
36
38  46  22  46a  50  52  18  220a

32

EP 0 825 942 B1

**Fig. 10**